# EUROPÄISCHE PATENTSCHRIFT

(11) **EP 3 591 243 B1**
(45) Veröffentlichungstag und Bekanntmachung des Hinweises auf die Patenterteilung: **03.04.2024**
(21) Anmeldenummer: 19180953.2
(22) Anmeldetag: 18.06.2019
(51) Int. Cl.: F16B 31/02

(54) **BEFESTIGUNGSELEMENT MIT MONTAGEKONTROLLELEMENT ZUR VERANKERUNGSKONTROLLE**
FIXING ELEMENT WITH ASSEMBLY MONITORING ELEMENT FOR ANCHORING MONITORING
ÉLÉMENT DE FIXATION POURVU D'ÉLÉMENT DE CONTRÔLE DE MONTAGE DESTINÉ AU CONTRÔLE D'ANCRAGE

(30) Priorität: 02.07.2018 DE 102018210866
(43) Veröffentlichungstag der Anmeldung: 08.01.2020
(73) Patentinhaber: EJOT SE & Co. KG, 57319 Bad Berleburg (DE)
(72) Erfinder: SCHÄFER, Wolfgang, 57334 Bad Laasphe (DE); KNEBEL, Ulrich, 57319 Bad Berleburg (DE); HACKLER, Erhard, 57319 Bad Berleburg (DE)
(74) Vertreter: Bardehle Pagenberg Partnerschaft mbB Patentanwälte Rechtsanwälte

(56) Entgegenhaltungen:
- DE-A1- 2 421 937
- DE-A1- 2 733 036
- DE-A1- 3 318 262
- US-A- 2 292 557
- US-A- 4 322 193

## Beschreibung

Die vorliegende Erfindung betrifft im Allgemeinen ein Befestigungselement mit Verankerungskontrolle, insbesondere ein Befestigungselement zum Einbringen in einen Untergrund.

Bei der Befestigung eines Gegenstands an oder in einem Untergrund ist es notwendig, dass das dafür verwendete Befestigungselement einen ausreichenden Halt in dem Untergrund findet. Ein ausreichender Halt bedeutet, dass das Befestigungselement sich nicht aus dem Untergrund löst, beziehungsweise nur unter einem substantiellen Kraftaufwand aus dem Untergrund herausgezogen werden kann. Damit das Befestigungselement ausreichenden Halt in dem Untergrund findet, muss es in dem Untergrund verankert werden. Man spricht in diesem Zusammenhang auch davon, dass eine Verankerung ein Sperren gegen einen Auszug aus dem Untergrund bewirkt, also ein unbeabsichtigtes Ausziehen des Befestigungselements aus dem Untergrund erschwert oder verhindert wird.

Ein Einbringen eines Befestigungselements in einen Untergrund wird allgemein als Montage bezeichnet. Eine Montage kann aus einem Setzen des Befestigungselements in den Untergrund bestehen. Bei dem Setzen des Befestigungselements in den Untergrund wird beispielsweise eine kraftschlüssige Verbindung zwischen dem Befestigungselement und dem Untergrund geschaffen. Kraftschlüssig bedeutet, dass eine Reibungskraft zwischen zumindest einem Teil des Befestigungselements und zumindest einen Teil des Untergrunds existiert. Solange eine auf das verankerte Befestigungselement einwirkende Kraft geringer ist als die Reibungskraft zwischen dem zumindest einen Teil des Befestigungselements und dem zumindest einen Teil des Untergrunds, wird ein Auszug des Befestigungselements aus dem Untergrund verhindert. Die Reibungskraft kann auch als Verankerungskraft bezeichnet werden.

Man spricht von einer ausreichenden Verankerungskraft, wenn die Verankerungskraft so groß ist, dass das Befestigungselement nach einer bestimmungsgemäßen Montage sicher, das heißt im Wesentlichen unbeweglich bezüglich einer Auszugsrichtung, in dem Untergrund verankert ist. Als Auszugsrichtung bezeichnet man beispielsweise eine Richtung heraus aus dem Untergrund oder weg von dem Untergrund. Ist das Befestigungselement beispielsweise angepasst nach der Montage in einem Untergrund mit einer bestimmten Last belastet zu werden, beispielsweise eine Last zu halten, zu tragen oder abzustützen, so spricht man von einer ausreichenden Verankerungskraft, wenn die Verankerungskraft so groß ist, dass das Befestigungselement durch die Last nicht aus seiner Verankerung, also dem Untergrund, herausgezogen oder herausgerissen wird.

Im Allgemeinen ist es wünschenswert eine Überprüfung der Verankerungskraft eines Befestigungselements in einem Untergrund vorzunehmen, damit es nicht zu Beschädigungen an dem Untergrund oder an eventuell an dem Befestigungselement angeordneten Lasten kommt. Ist die von dem Befestigungselement aufgebrachte Verankerungskraft nicht ausreichend, kann dies beispielsweise dazu führen, dass sich das Befestigungselement aus dem Untergrund herauslöst. In manchen Fällen kann dies zu einer Beschädigung des Untergrunds führen, beispielsweise wenn das Befestigungselement beim Herauslösen aus dem Untergrund einen Teil des Untergrunds mit sich zieht und dabei den Untergrund zumindest teilweise zerstört. In dem Fall, dass die aufgebrachte Verankerungskraft nicht ausreichend ist und eine Last an dem Befestigungselement angeordnet ist, kann das Herauslösen des Befestigungselements aus dem Untergrund beispielsweise dazu führen, dass die Last beschädigt wird. Um Beschädigungen sowohl an dem Untergrund als auch an einer eventuell an dem Befestigungselement angeordneten Last zu vermeiden, ist es wichtig, dass eine ausreichende Verankerungskraft des Befestigungselements in dem Untergrund vorliegt

Häufig ist eine Überprüfung, ob die Verankerungskraft eines verankerten Befestigungselements ausreichend ist, jedoch schwierig. Beispielsweise kann einem Untergrund in der Regel nicht angesehen werden, ob sich Hohlräume im Untergrund befinden oder ob der Untergrund zu weich ist. Wenn sich Hohlräume in dem Untergrund befinden, kann das Befestigungselement beim Einbringen in den Untergrund auf einen dieser Hohlräume treffen. In diesem Fall hat das Befestigungselement weniger Kontakt zu dem Untergrund und erfährt eine geringere Reibungskraft durch den umliegenden Untergrund. Folglich kann die Verankerungskraft des Befestigungselements nicht ausreichend sein. Ist der Untergrund zu weich, so kann der Anteil des Befestigungselements, der in den Untergrund eingebracht ist, zwar vollständig in Kontakt mit dem Untergrund sein und von dem Untergrund umschlossen sein, jedoch kann die Reibungskraft, die zwischen dem weichen Untergrund und dem Befestigungselement entsteht, nur gering sein, so dass die Verankerungskraft ebenfalls nicht ausreichend sein kann.

Da dem Untergrund in der Regel nicht angesehen werden kann, ob eine ausreichende Verankerungskraft aufgebracht werden kann, beschränkt sich die Überprüfung der ausreichenden Verankerungskraft eines Befestigungselements in einem Untergrund häufig darauf, das eingebrachte Befestigungselement nach dem Setzvorgang mit einer definierten Kraft zu belasten. Beispielsweise zeigt die Patentschrift DE 10 2010 040 519 B4 eine sogenannte Auszugsprobe, bei der eine definierte Auszugskraft auf ein in einem Untergrund verankertes Befestigungselement ausgeübt wird und die definierte Auszugskraft in einer Auszugsrichtung, also zumindest teilweise heraus aus dem Untergrund, wirkt.

Eine Überprüfung der ausreichenden Verankerungskraft durch Belastung eines verankerten Befestigungselements hat jedoch mehrere Nachteile. So kann beispielsweise nicht ausgeschlossen werden, dass der Untergrund beschädigt wird, wenn die Verankerung des Befestigungselements keine ausreichende Verankerungskraft aufbringt. Ist die Verankerungskraft nicht ausreichend könnte das Befestigungselement beispielsweise aus dem Untergrund herausgerissen werden und dadurch zum einen der Untergrund beschädigt werden zum anderen aber auch eventuelle Schichten, die vor dem Untergrund angeordnet sein können, beschädigt werden.

In anderen Fällen, beispielsweise wenn das Befestigungselement angepasst ist bei der Montage in einem Untergrund versenkt zu werden, ist eine solche nachträgliche Überprüfung durch eine Auszugsprobe hingegen gar nicht erst möglich.

Das zum Stand der Technik gehörende Dokument DE 27 33 036 A beschreibt eine Spannungsanzeigevorrichtung zur visuellen Anzeige der Spannung in Dachbolzen bei Minen oder Bergwerken. Hierbei beschreibt Dokument DE 27 33 036 A eine schraubenförmig ausgebildete Federunterlegscheibe, die zwischen dem Kopf des Bolzens und einer Lagerplatte, die an einem Untergrund befestigt werden soll, eingesetzt wird. Die Federunterlegscheibe weist einen axial expandierten Zustand und einen vollständig zusammengedrückten Zustand auf, wobei der vollständig zusammengedrückte Zustand einer Kompression entspricht, die durch den Bolzen auf die Federunterlegscheibe ausgeübt wird, wenn der Bolzen angezogen wird.

Es wäre daher wünschenswert eine Überprüfung hinsichtlich einer ausreichenden Verankerungskraft bereits während der Montage des Befestigungselements vorzunehmen und so eine sichere Verankerung zu ermöglichen.

Die Aufgabe, die sich die vorliegende Erfindung daher stellt ist es die vorgenannten Nachteile zu überwinden und ein Befestigungselement bereitzustellen, welches eine Kontrolle der ausreichenden Verankerungskraft des Befestigungselements in einem Untergrund während der Montage ermöglicht, gleichzeitig aber eine einfache Montage des Befestigungselements unter geringem Kraftaufwand möglich macht. Da die Kontrolle der Verankerungskraft die Verankerung des Befestigungselements betrifft, kann sie auch als Verankerungskontrolle oder Montagekontrolle bezeichnet werden.

Diese Aufgabe wird gelöst durch ein Befestigungselement und ein Verfahren entsprechend der unabhängigen Ansprüche der vorliegenden Erfindung. Bevorzugte und vorteilhafte Ausgestaltungen finden sich in den abhängigen Ansprüchen.

Anwendung finden kann der erfindungsgemäße Gegenstand beispielsweise bei einer Montage eines Befestigungselements in einem Standardmauerwerk. Ebenso kann jedoch auch eine Anwendung auf mehrschalige Mauerwerke erfolgen, beispielsweise Wärmedämmungsverbundsystemen, verblendete Mauerwerke oder vorgehängte, hinterlüftete Fassaden.

Ein erfindungsgemäßes Befestigungselement zum Einbringen in einen Untergrund weist einen ersten Endbereich auf, wobei der erste Endbereich angepasst ist zur Verankerung des Befestigungselements in dem Untergrund.

Das Befestigungselement kann im Wesentlichen stabförmig sein, also eine Erstreckung in eine Raumrichtung haben, die größer ist als die Erstreckung in die anderen Raumrichtungen. Unter den Begriff des Befestigungselements fallen beispielsweise eine Schraube, ein Bolzen, ein Anker, insbesondere ein Sanieranker, ein Gewindestift, oder eine Gewindestange.

Der erste Endbereich kann an dem Befestigungselement an einem vorderen Ende des Befestigungselements angeordnet sein, wobei das vordere Ende beim Einbringen des Befestigungselements in den Untergrund als erstes in den Untergrund eingebracht wird. Wird das Befestigungselement in den Untergrund eingebracht, erfolgt das Einbringen in einer Richtung hinein in den Untergrund. Diese Richtung wird beispielsweise als Einzugsrichtung bezeichnet. Der erste Endbereich kann daher in Einzugsrichtung vorn am Befestigungselement angeordnet sein.

Ganz allgemein kann der Untergrund aus einem gängigen Baustoff bestehen. Eine nicht abschließende Auflistung gängiger Baustoffe umfasst beispielsweise Holz, Stein, Beton, Verbundwerkstoffe, Dämmstoffe oder eine beliebige Kombination einer oder mehr der vorgenannten Materialien. Insbesondere kann der Untergrund ein Mauerwerk sein.

Der Untergrund kann ein einschaliger Untergrund sein. Dieser einschalige Untergrund kann im Wesentlichen aus einem zusammenhängenden Verankerungsgrund bestehen. Der Verankerungsgrund kann beispielsweise eine im Wesentlichen gleichartige Dichte und/oder Beschaffenheit aufweisen.

Der Untergrund kann aber auch ein mehrschaliger Untergrund sein. Ein mehrschaliger Untergrund kann aus zwei oder mehr Schichten bestehen. Die Schichten können zueinander angeordnete Teilstücke sein. Die einzelnen Schichten können eines oder mehrere von einem oder mehreren Verankerungsgründen, eine oder mehrere Tragschalen, eine oder mehrere Vorsatzschalen, eine oder mehrere Vormauerschalen, ein oder mehrere Dämmstoffe beziehungsweise Dämmstoffplatten, oder ein oder mehrere Verblendmauerwerke sein.

Die Schichten eines mehrschaligen Untergrunds können direkt oder indirekt miteinander verbunden sein. So können sie direkt aneinander anliegen oder einen oder mehrere Zwischenräume bilden, wobei die einen oder mehreren Zwischenräume gefüllt oder ungefüllt sein können. Beispielsweise können die einen oder mehr Zwischenräume mit Luft oder alternativ mit einem Dämmstoff gefüllt sein. Zur Verbindung der Schichten des mehrschaligen Untergrunds können beispielsweise Befestigungselemente wie das erfindungsgemäße Befestigungselement genutzt werden. Zum Beispiel kann ein erfindungsgemäßes Befestigungselement verwendet werden, um mindestens eine Schicht des mehrschaligen Untergrunds gegen mindestens eine andere Schicht des mehrschaligen Untergrunds zu sichern oder abzustützen. Dies kann beispielsweise bei der Konstruktion des Untergrunds erfolgen oder nachträglich im Zuge einer Sanierung. Die zur Sanierung verwendeten Befestigungselemente werden häufig auch als Sanieranker bezeichnet. Diese Sanieranker werden in vielen Fällen vollständig in den mehrschaligen Untergrund eingebracht oder vollständig in dem mehrschaligen Untergrund versenkt.

Der erste Endbereich des erfindungsgemäßen Befestigungselements ist angepasst zur Verankerung des Befestigungselements in dem Untergrund. Eine Verankerung kann beispielsweise erreicht werden durch ein Einbringen des Befestigungselements in den Untergrund. Ein Einbringen des Befestigungselements in den Untergrund kann beispielsweise durch Einschrauben des Befestigungselements in den Untergrund erfolgen.

Die Verankerung kann erfolgen entweder als direkte Verankerung oder als indirekte Verankerung. Eine direkte Verankerung bedeutet einen unmittelbaren Kontakt des ersten Endbereichs des Befestigungselements mit dem Untergrund. Beispielsweise kann eine direkte Verankerung bedeuten, dass der erste Endbereich des Befestigungselements unmittelbar in den Untergrund eingebracht wird und mit dem Untergrund in Kontakt kommt. Dies kann beispielsweise durch ein Einschrauben des ersten Endbereichs des Befestigungselements in den Untergrund erfolgen. Eine indirekte Verankerung eines Befestigungselements bedeutet hingegen einen mittelbaren Kontakt des ersten Endbereichs des Befestigungselements mit dem Untergrund. Dieser Kontakt kann vermittelt werden durch ein Hilfsmittel. Beispielsweise kann ein Hilfsmittel in einen Untergrund eingebracht werden und ein erster Endbereich eines Befestigungselements in das Hilfsmittel eingebracht werden. Beispielsweise kann dies durch Einschrauben eines ersten Endbereichs eines Befestigungselements in ein solches Hilfsmittel geschehen. Ein solches Hilfsmittel kann beispielweise ein Dübel oder eine Dübelhülse sein.

Aus der Verdichtung des Untergrunds im Falle einer direkten Verankerung oder des Hilfsmittels im Falle einer indirekten Verankerung, resultiert ein fester Sitz des ersten Endbereichs des Befestigungselements und damit des Befestigungselements in dem Untergrund, der mit einer Verankerungskraft verbunden ist, die auf das Befestigungselement wirkt und einem Entfernen des Befestigungselements aus dem Untergrund entgegen gerichtet ist. Durch die Verankerung in dem Untergrund bringt der erste Endbereich die Verankerungskraft des Befestigungselements in dem Untergrund auf.

Das erfindungsgemäße Befestigungselement weißt auch einen zweiten Endbereich mit einem daran angeordneten Montagekontrollelement auf. Der zweite Endbereich kann sich beispielsweise an einem in Einzugsrichtung hinteren Ende des Befestigungselements befinden. Dabei kann der zweite Endbereich dem ersten Endbereich gegenüberliegen. Insbesondere können sich der erste Endbereich und der zweite Endbereich an gegenüberliegenden Enden des Befestigungselements befinden.

Der zweite Endbereich des Befestigungselements kann angepasst sein durch einen Vortrieb des Befestigungselements näher an den Untergrund herangeführt zu werden. Ein solcher Vortrieb kann beispielweise durch das Einziehen des ersten Endbereichs in den Untergrund ermöglicht werden.

Das Montagekontrollelement ist angepasst ein Einziehen des zweiten Endbereichs des Befestigungselements in den Untergrund beim Verankern zumindest so lange zu verhindern bis eine bestimmte Verankerungskraft des Befestigungselements in dem Untergrund erreicht wird.

Das Montagekontrollelement, welches an dem zweiten Endbereich angeordnet ist, ist angepasst ein Einziehen des zweiten Endbereichs des Befestigungselements in den Untergrund beim Verankern zumindest so lange zu verhindern bis eine bestimmte Verankerungskraft des Befestigungselements in dem Untergrund erreicht wird.

Die bestimmte Verankerungskraft wird durch die Verankerung des ersten Endbereichs des Befestigungselements im Untergrund aufgebracht. Damit sich das Befestigungselement bei der Verankerung in den Untergrund einzieht, ist eine anfängliche Verankerungskraft notwendig. Diese anfängliche Verankerungskraft kann beispielsweise vorliegen, wenn der erste Endbereich des Befestigungselements einen Halt im Untergrund findet, der ein Einziehen zur Folge hat. Dies kann beispielsweise der Fall sein, wenn der erste Endbereich in dem Untergrund packt und in der Folge eingezogen wird. Die Verankerungskraft des Befestigungselements in dem Untergrund kann beim weiteren Einziehen des ersten Endbereichs in den Untergrund zunehmen und größer werden als die anfängliche Verankerungskraft. Wenn die Verankerungskraft so groß wird, dass sie mindestens so groß ist wie die bestimmte Verankerungskraft, wird ein Einbringen des zweiten Endbereichs in den Untergrund ermöglicht, weil das Montagekontrollelement angepasst ist, das Eindringen des zweiten Endbereichs nur so lange zu verhindern bis die bestimmte Verankerungskraft aufgebracht wird. Bestimmt wird die Verankerungskraft dementsprechend durch die Ausgestaltung des Montagekontrollelements.

Die bestimmte Verankerungskraft kann eine ausreichende Verankerungskraft sein. Man spricht von einer ausreichenden Verankerungskraft, wenn die Verankerungskraft so groß ist, dass das Befestigungselement nach einer bestimmungsgemäßen Montage sicher, das heißt im Wesentlichen unbeweglich bezüglich einer Auszugsrichtung, verankert ist. Die Auszugsrichtung kann beispielsweise der Einzugsrichtung entgegengesetzt sein oder zumindest eine Komponente aufweisen, die der Einzugsrichtung entgegengesetzt ist. Unbeweglich bezüglich einer Auszugsrichtung bedeutet, dass das Befestigungselement bezüglich einer Richtung im Wesentlichen heraus aus dem Untergrund unbeweglich ist. Ist das Befestigungselement beispielsweise angepasst nach dem Setzen in einen Untergrund eine bestimmte Kraft oder Last auszuhalten, so spricht man von einer ausreichenden Verankerungskraft, wenn die Verankerungskraft so groß ist, dass das Befestigungselement durch die Kraft oder Last nicht aus seiner Verankerung, also dem Untergrund, herausgerissen wird.

Durch die Verwendung des Montagekontrollelements wird eine Verankerungskontrolle ermöglicht. Dies bedeutet, dass die Verankerungskraft des Befestigungselements in dem Untergrund während des Setzvorgangs, also während des Einbringens in den Untergrund, überprüft wird. Erreicht oder übersteigt die Verankerungskraft eine bestimmte Verankerungskraft so zeigt das Montagekontrollelement dies an.

Eine Verankerungskontrolle wird durch das Montagekontrollelement beispielsweise dadurch ermöglicht, dass es dem Einziehen des zweiten Endbereichs in den Untergrund einen Widerstand entgegensetzt. Dies bedeutet, dass das Einziehen des zweiten Endbereichs in den Untergrund erschwert wird. In einem Beispiel wird der zweite Endbereich beispielsweise durch einen Vortrieb, der durch das Einziehen des ersten Endbereichs des Befestigungselements in den Untergrund bewirkt wird, näher an den Untergrund herangeführt bis eine Seite des Montagekontrollelements, die dem Untergrund zugewandt ist, an dem Untergrund oder einem sich in dem Untergrund befindlichen Hilfsmittel anliegt. Einen weiteren Vortrieb des Befestigungselements verhindert das Montagekontrollelement nun dadurch, dass das Montagekontrollelement gegen den Untergrund oder das Hilfsmittel drückt.

Man kann daher auch sagen, dass das Montagekontrollelement eine Sperrwirkung besitzt, die ein vollständiges oder bestimmungsgemäßes Setzen des Befestigungselements direkt oder indirekt in dem Untergrund verhindert, wenn die bestimmte Verankerungskraft nicht erreicht wird. In diesem Zusammenhang bedeutet Sperrwirkung, dass der Montage des Befestigungselements eine Kraft oder ein Widerstand entgegengesetzt wird, die beziehungsweise der ein Einziehen des zweiten Endbereichs in den Untergrund verhindert. Der zweite Endbereich wird sozusagen gegen eine Bewegung oder ein Einziehen in den Untergrund hinein gesperrt. Die bestimmte Verankerungskraft des Befestigungselements in dem Untergrund ist dann ausreichend, wenn die Sperrwirkung des Montagekontrollelements nicht ausreicht, um ein Einziehen des zweiten Endbereichs des Befestigungselements in den Untergrund zu verhindern.

Bleibt die Sperrwirkung des Montagekontrollelements während des Verankerns bestehen, also bleibt insbesondere der Widerstand, den das Montagekontrollelement einem Einziehen des zweiten Endbereichs des Befestigungselements in den Untergrund entgegensetzt, bestehen, so zeigt dies an, dass die Verankerungskraft des Befestigungselements, insbesondere des ersten Endbereichs, in dem Untergrund nicht ausreichend ist. D.h. in diesem Fall ist ein vollständiges Setzen des Befestigungselements nicht möglich, weil das Montagekontrollelement dem Setzvorgang einen Widerstand entgegensetzt, der größer ist als die Verankerungskraft. D.h. wird in diesem Fall das Befestigungselement weiter gedreht, kommt es zu einem Überdrehen des Befestigungselements aber zu keinem weiteren Vorschub mehr, was anzeigt, dass keine ausreichende Verankerungskraft aufgebracht wird. Dies kann beispielsweise der Fall sein, wenn das Befestigungselement beim Verankern auf einen Hohlraum trifft oder der Untergrund zu weich ist.

Das Montagekontrollelement ist somit angepasst, eine Verankerungskontrolle des Befestigungselements zu ermöglichen. Nur wenn das Befestigungselement ausreichend Halt in dem Untergrund findet, zeigt das Montagekontrollelement an, dass die bestimmte Verankerungskraft vorliegt und erlaubt das Einziehen des zweiten Endbereichs des Befestigungselements in den Untergrund. D.h. nur wenn eine ausreichende Verankerungskraft vorherrscht, ist ein vollständiges Setzen des Befestigungselements möglich. Das Montagekontrollelement kann dabei beispielsweise angepasst sein die bestimmte Verankerungskraft beispielweise durch einen Wegfall der Sperrwirkung anzuzeigen. Dies kann beispielsweise geschehen durch einen Wegfall des dem Einziehen des zweiten Endbereichs in den Untergrund entgegengesetzten Widerstands. So ermöglicht das Montagekontrollelement eine vollständige oder bestimmungsgemäße Montage des Befestigungselements im Fall einer bestimmten Verankerungskraft und verhindert eine vollständige oder bestimmungsgemäße Montage des Befestigungselements im Fall, dass die bestimmte Verankerungskraft nicht vorliegt.

Das erfindungsgemäße Befestigungselement erlaubt erstmalig, eine Kontrolle der Verankerungskraft eines Befestigungselements in einem Untergrund durchzuführen. Dies wird dadurch erreicht, dass dem vollständigen Setzen des Befestigungselements in den Untergrund ein Widerstand so lange entgegengesetzt wird bis eine bestimmte Verankerungskraft erreicht wird. Dass ein derartiger Widerstand der Montage nur so lange entgegengesetzt wird bis eine bestimmte Verankerungskraft des Befestigungselements in dem Untergrund erreicht ist, wird beispielsweise dadurch erzielt, dass eine Sperrwirkung, die von dem Montagekontrollelement des Befestigungselements aufgebracht wird, wegfällt, wenn die bestimmte Verankerungskraft des Befestigungselements in dem Untergrund vorliegt.

In einer bevorzugten Ausführungsform des erfindungsgemäßen Befestigungselements ist das Befestigungselement angepasst zum zumindest teilweisen Einbringen in ein Hilfsmittel. Das Hilfsmittel kann ein Dübel sein, wobei der Dübel zumindest eine erste Spreizzone aufweist und die erste Spreizzone angepasst sein kann in den Untergrund eingebracht zu werden. Ein Dübel kann beispielsweise eine oder mehrere Dübelhülsen aufweisen. Das Hilfsmittel kann dabei beispielsweise angepasst sein in eine Vertiefung in dem Untergrund eingebracht zu werden. Eine Vertiefung kann beispielsweise eine Bohrung oder ein Bohrloch sein. Das Einbringen kann beispielsweise in Form eines Einschraubens geschehen. Das Hilfsmittel kann aber auch ein Dübelhülse mit Druckteller sein, wobei der Druckteller sich auf oder in einer obersten Schicht eines mehrschichtigen Untergrunds befinden kann und die Dübelhülse sich in den Untergrund erstrecken kann.

Im Zuge der Verankerung des Befestigungselements kann das Befestigungselement in das Hilfsmittel eingebracht werden, wobei sich der erste Endbereich des Befestigungselements in das Hilfsmittel einzieht. Das Einziehen kann beispielsweise durch das Vorliegen einer anfänglichen Verankerungskraft geschehen. Vorzugsweise weist das Hilfsmittel mindestens eine Spreizzone auf und der erste Endbereich zieht sich in die mindestens eine Spreizzone ein. Bei diesem Einziehen des ersten Endbereichs in das Hilfsmittel kann das Befestigungselement angepasst sein, das Hilfsmittel gegen den Untergrund zu drücken. Dies geschieht beispielsweise indem der erste Endbereich die mindestens eine Spreizzone des Hilfsmittels gegen den Untergrund drückt. Auf diese Weise wird das Hilfsmittel in dem Untergrund verformt, um so eine möglichst große Kontaktfläche zwischen dem verformten Hilfsmittel und dem Untergrund zu schaffen. Zudem wird durch das gegen den Untergrund Drücken eine Normalkraft erzeugt, die von dem Befestigungselement weg in Richtung des Untergrunds gerichtet ist. Die Kontaktfläche und die Normalkraft sind ursächlich für die Reibungshaftung, welche einem Entfernen des Befestigungselements aus dem Untergrund entgegengerichtet ist. Die Reibungskraft ist dabei umso größer je größer die Normalkraft ist und je größer die Kontaktfläche ist. Durch die Reibungskraft wird eine bestimmte Verankerungskraft aufgebracht. Ist die Verankerungskraft so groß, dass das Befestigungselement mit einer bestimmten Kraft belastet werden kann ohne aus dem Bohrloch ausgezogen zu werden, so ist die Verankerungskraft ausreichend und es wird eine sichere Verankerung erzielt.

Je nachdem in welchen Untergrund das Befestigungselement gesetzt werden soll, können auch mehrere Dübel verwendet werden, wobei die mehreren Dübel hintereinander in eine Vertiefung in dem Untergrund eingebracht werden. Ebenso können ein oder mehrere Dübel verwendet werden, die jeweils aus einer oder mehreren Dübelhülsen bestehen können. Im Fall eines mehrschaligen Untergrunds kann es beispielsweise empfehlenswert sein mehrere Dübel oder mehrere Dübelhülsen zu verwenden, wenn für mehrere der Schichten des mehrschaligen Untergrunds je ein Dübel verwendet wird. So ließe sich beispielsweise eine Abstandsbefestigung vornehmen, in der verschiedene Schichten des mehrschaligen Untergrunds nach dem Setzen des Befestigungselements einen oder mehrere Abstände zueinander aufweisen. Diese einen oder mehreren Abstände können beispielsweise einstellbar sein. Auch ist eine derartige Abstandbefestigung mit nur einem Dübel möglich, wenn dieser Dübel eine sich über einen definierten Bereich erstreckende Dübelhülse mit mehreren Spreizzonen aufweist, die so zueinander angeordnet sind, dass die Spreizzonen in verschiedenen Schichten in dem mehrschaligen Untergrund liegen, wenn der Dübel in den mehrschaligen Untergrund eingesetzt wird. Weiter kann es auch möglich sein, dass das Befestigungselement angepasst ist in einem Teilbereich des Untergrunds direkt verankert zu werden und in einem anderen Teilbereich des Untergrunds indirekt verankert zu werden.

Ein Vorteil des Setzens des Befestigungselements in einen Dübel kann beispielsweise darin bestehen, dass ein besserer Kontakt zwischen dem Befestigungselement und dem Untergrund besteht. Beispielsweise wird der Dübel durch das Einbringen des Befestigungselements zumindest teilweise gespreizt und gegen den Untergrund gedrückt. Dadurch werden kraftschlüssige Verbindungen zwischen dem Befestigungselement, dem Dübel und dem Untergrund erzeugt, beispielsweise durch die Reibungshaftung, die an den Kontaktstellen zwischen dem Befestigungselement und dem Dübel sowie den Kontaktstellen zwischen dem Dübel und dem Untergrund entstehen. Die Verwendung eines Dübels kann beispielsweise die Reibungskraft erhöhen, die einem Ausziehen des Befestigungselements entgegengesetzt wird. Dadurch kann das verankerte Befestigungselement beispielsweise in der Lage sein eine höhere Last zu tragen oder Schichten eines mehrschaligen Untergrunds wirkungsvoller gegeneinander abzustützen.

In einer weiteren bevorzugten Ausführungsform des erfindungsgemäßen Befestigungselements ist der erste Endbereich des Befestigungselements ausgestaltet ein erstes Spreizmittel zu bilden und der zweite Endbereich ausgestaltet zumindest teilweise ein zweites Spreizmittel zu bilden. Es ist jedoch auch möglich, dass nur der erste Endbereich ausgestaltet ist ein erstes Spreizmittel zu bilden während der zweite Endbereich kein zweites Spreizmittel aufweist. Ebenso kann es möglich sein, dass nur der zweite Endbereich zumindest teilweise ein Spreizmittel umfasst, während der erste Endbereich kein Spreizmittel aufweist. Das erste und/oder das zweite Spreizmittel können angepasst sein in den Untergrund eingebracht zu werden. So können das erste und das zweite Spreizmittel angepasst sein, direkt in den Untergrund eingebracht zu werden und eine direkte Verankerung des Befestigungselements in dem Untergrund zu ermöglichen. Das erste und das zweite Spreizmittel können aber auch angepasst sein eine indirekte Verankerung des Befestigungselements in dem Untergrund zu ermöglichen, beispielsweise, indem sie ein in dem Untergrund enthaltenes Hilfsmittel spreizen. Ein derartiges Hilfsmittel können beispielsweise eine oder mehrere Dübel sein. Die einen oder mehreren Dübel können dabei je eine oder mehrere Spreizzonen besitzen und die Spreizmittel angepasst sein, je mindestens eine dieser Spreizzonen zu spreizen. In einem Beispiel kann das Befestigungselement in einem mehrschaligen Untergrund montiert werden, so dass die mehreren Spreizzonen jeweils in einer der Schalen des mehrschaligen Untergrunds liegen.

Ein Vorteil in der Verwendung von einem ersten Spreizmittel, welches an dem ersten Endbereich angeordnet ist, und einem zweiten Spreizmittel, welches an dem zweiten Endbereich angeordnet ist, ist beispielsweise, dass das Befestigungselement durch die mehreren Spreizmittel angepasst sein kann, einen mehrschaligen Untergrund zu sichern oder abzustützen. Das erste Spreizmittel kann dabei eine bestimmte Verankerungskraft zur Verankerung in einem Verankerungsgrund aufbringen während das zweite Spreizmittel eine weitere Schicht des Untergrunds halten kann, beispielsweise direkt an dem Verankerungsgrund anliegend oder in einer bestimmten Entfernung zu dem Verankerungsgrund.

In einer weiteren bevorzugten Ausführungsform des erfindungsgemäßen Befestigungselements ist das Montagekontrollelement an dem Befestigungselement zum Teil zwischen dem ersten Spreizmittel und dem zweiten Spreizmittel angeordnet. Beispielsweise kann das Befestigungselement stabförmig sein, also eine Erstreckung in eine Raumrichtung haben, die größer ist als die Erstreckung in die anderen Raumrichtungen. An einem vorderen Ende des stabförmigen Befestigungselements kann sich der erste Endbereich befinden und an einem hinteren Ende des stabförmigen Befestigungselements der zweite Endbereich. Stabförmig beziehungsweise sich entlang eines definierten Bereichs erstreckend bedeutet in diesem Fall, dass das Befestigungselement im Wesentlichen entlang einer Achse ausgedehnt ist. Die beiden Endbereiche können sich beispielsweise an gegenüberliegenden Enden auf dem Befestigungselement, also auf der Achse, befinden. Entlang dieser Achse können der erste Endbereich und der zweite Endbereich beispielsweise aneinander angrenzen. Weiter können sie hintereinander in Bezug auf eine Richtung, die durch die Achse vorgegeben wird, angeordnet sein. Der erste Endbereich kann dabei an den zweiten Endbereich angrenzen oder entlang der Achse in einem Abstand, also entfernt von dem zweiten Endbereich, angeordnet sein. Das Montagekontrollelement kann sich auf der Achse zumindest teilweise zwischen dem ersten Endbereich und dem zweiten Endbereich befinden. Beim Einbringen in einen Untergrund kann beispielsweise zunächst der erste Endbereich eingebracht werden und erst danach der zweite Endbereich in den Untergrund eingebracht werden, nachdem das Montagekontrollelement eine bestimmte Verankerungskraft angezeigt hat.

Das Montagekontrollelement verhindert während der Montage des Befestigungselements, dass das zweite Spreizmittel in den Untergrund eindringt bevor eine bestimmte Verankerungskraft vorliegt. Beispielsweise kann so verhindert werden, dass das zweite Spreizmittel in eine der Spreizzonen der einen oder mehreren Dübel, die in dem Untergrund eingebracht sein können, eindringt.

In einer weiteren bevorzugten Ausführungsform des erfindungsgemäßen Befestigungselements ist das Montagekontrollelement in einem bestimmten Abstand zu dem ersten Endbereich an dem Befestigungselement angeordnet. Dies bedeutet, dass das Montagekontrollelement entfernt von dem ersten Endbereich an dem Befestigungselement angeordnet ist. Dieser Abstand korreliert dabei mit einer Einzugstiefe des Befestigungselements in den Untergrund. Beispielsweise kann der Abstand so groß sein wie eine Eindringtiefe des ersten Endbereichs in den Untergrund, die notwendig ist, um eine ausreichende Verankerungskraft bereitzustellen. Beispielsweise kann der Abstand so groß sein wie eine Eindringtiefe des ersten Endbereichs in den Untergrund, die notwendig ist, um eine bestimmte Verankerungskraft in einem standardisierten Untergrund bereitzustellen. Der Abstand kann auch so groß sein wie eine Eindringtiefe des ersten Endbereichs in dem Untergrund, die notwendig ist, um eine ausreichende Verankerungskraft in einem standardisierten Untergrund bereitzustellen. Ein standardisierter Untergrund kann beispielsweise nach im Verkehr üblichen Vorgaben von einem Hersteller des Befestigungselements vorgegeben oder etabliert werden.

Der Abstand kann beispielsweise dabei helfen, die Kontrolle der Verankerungskraft des Befestigungselements in dem Untergrund zu überprüfen. Der Abstand, den das Montagekontrollelement vom ersten Endbereich des Befestigungselements besitzt, kann beispielsweise mit der Eindringtiefe des ersten Endbereichs in den Untergrund beziehungsweise dem Verankerungsgrund zusammenhängen, der notwendig ist, um eine Verankerung des Befestigungselements zu ermöglichen. Beispielsweise kann der Abstand derart gewählt werden, dass er mit einer bestimmten Eindringtiefe des ersten Endbereichs in dem Untergrund zusammenhängt und für diese bestimmte Eindringtiefe der erste Endbereich beispielsweise durch Verankern im Untergrund oder Spreizen einer Spreizzone eine bestimmte Verankerungskraft aufbringt. Ebenso kann mit der Eindringtiefe auch eine ausreichende Verankerungskraft verbunden sein.

Alternativ kann das Montagekontrollelement derart an dem Befestigungselement angeordnet sein, dass sie beim Setzen des Befestigungselements zu dem Zeitpunkt unmittelbar bevor der erste Endbereich beim Verankern in den Untergrund oder eine Spreizzone eines Dübels eingezogen wird einen bestimmten Abstand zu dem Untergrund aufweist. Beim Einziehen des ersten Endbereichs in den Untergrund wird dieser Abstand verringert, indem das Befestigungselement einen Vortrieb erfährt, der dazu führt, dass der zweite Endbereich mit dem daran angeordneten Montagekontrollelement näher an den Untergrund herangezogen wird. Der erste Endbereich kann dabei angepasst sein beim Einziehen in den Untergrund oder eine Spreizzone eines Dübels einen Vortrieb bereitzustellen. Der bestimmte Abstand kann beispielsweise so gewählt werden, dass er mit einer bestimmten Eindringtiefe des ersten Endbereichs in den Untergrund zusammenhängt und für diese bestimmte Eindringtiefe der erste Endbereich beispielsweise durch Verankern im Untergrund oder Spreizen einer Spreizzone eine bestimmte oder eine ausreichende Verankerungskraft aufbringt.

Ein Vorteil, der sich aus der Anordnung des Montagekontrollelements in einem Abstand zu dem ersten Endbereich beziehungsweise zu dem Untergrund ergibt, ist dass die Verankerungskontrolle einem standardisierten Prozess gleicht. Dies bedeutet, dass der Abstand für eine Vielzahl von Befestigungselementen gleich gewählt oder eingestellt werden kann, so dass diese Vielzahl von Befestigungselementen alle die gleiche Verankerungskontrolle erfahren, insbesondere das jeweilige Montagekontrollelement für jedes Befestigungselement das Vorliegen der gleichen bestimmten Verankerungskraft anzeigt.

In einer weiteren bevorzugten Ausführungsform des erfindungsgemäßen Befestigungselements ist das Montagekontrollelement angepasst sich bei Erreichen der bestimmten Verankerungskraft von dem Befestigungselement abzulösen. Ein Ablösen des Montagekontrollelements von dem Befestigungselement kann zerstörungsfrei geschehen oder eine Zerstörung des Montagekontrollelements umfassen. Eine Zerstörung kann beispielsweise bedeuten, dass sich das Montagekontrollelement von dem Befestigungselement ablöst oder nicht mehr in der Lage ist dem Einziehen des zweiten Endbereichs in den Untergrund einen Widerstand entgegen zu setzen. Beispielsweise kann dies erreicht werden, indem eine Kraft auf das Montagekontrollelement einwirkt, die das Montagekontrollelement beschädigt, beispielsweise durch ein Zerdrücken oder eine Scherkraft, die ein Ablösen des Montagekontrollelements von dem Befestigungselement bewirkt. Ist das Montagekontrollelement beispielsweise fixiert auf dem Befestigungselement angebracht, so kann das Montagekontrollelement durch eine Scherkraft von dem Befestigungselement getrennt werden. Im Falle dessen, dass das Montagekontrollelement nicht zerstört wird, kann sich das Montagekontrollelement beispielsweise auf dem Befestigungselement verschieben. Ist das Montagekontrollelement beispielsweise fixiert auf dem Befestigungselement angeordnet, so kann der Montagekontrollelement erst bei Erreichen der bestimmten Verankerungskraft auf dem Befestigungselement verschoben werden. Eine Verschiebung des Montagekontrollelements kann beispielsweise umfassen, dass das Montagekontrollelement um eine bestimmte Strecke verschoben wird. Nach dieser Verschiebung des Montagekontrollelements kann der Montagekontrollelement beispielsweise zur Abdichtung des Untergrunds relativ zum Befestigungselement beitragen. Diese Abdichtung kann beispielsweise dadurch geschehen, dass das Montagekontrollelement zwischen dem Untergrund und einem Kopf des Befestigungselements angeordnet ist. In einem Beispiel kann das Montagekontrollelement einen Zwischenraum zwischen dem Untergrund und dem Kopf des Befestigungselements ausfüllen und abdichten. Um die Abdichtungseigenschaften des Montagekontrollelements zu verbessern kann der Montagekontrollelement beispielsweise aus Kunststoff hergestellt sein.

Wird die bestimmte Verankerungskraft aufgebracht, so kann das Befestigungselement eine Vortriebskraft erfahren, die beispielsweise dazu führen kann, dass das Montagekontrollelement zerstört wird und sich vom Befestigungselement ablöst. Beispielsweise kann das Montagekontrollelement während des Verankerns des Befestigungselements in dem Untergrund an den Untergrund herangezogen werden. So kann das Montagekontrollelement zum Beispiel so weit an den Untergrund hereingezogen werden bis sie mit einer dem Untergrund zugewandten Seite an dem Untergrund oder einem Hilfsmittel anliegt. Nun setzt das Montagekontrollelement einem weiteren Einziehen des Befestigungselements in den Untergrund einen Widerstand entgegen. Ist die Vortriebskraft des Befestigungselements ausreichend groß kann dies dazu führen, dass sich das Montagekontrollelement von dem Befestigungselement ablöst oder zwischen dem Untergrund oder dem Hilfsmittel und dem zweiten Endbereich zerquetscht wird. Die Vortriebskraft zeigt dabei eine ausreichende Verankerungskraft des Befestigungselements in dem Untergrund durch die Verankerung des ersten Endbereichs in dem Untergrund an. In einem anderen Ausführungsbeispiel kann das Montagekontrollelement beim Einziehen auch auf den Untergrund oder das Hilfsmittel treffen und beim Erreichen einer ausreichenden Verankerungskraft durch den Untergrund von dem Befestigungselement heruntergedrückt werden.

Ein Vorteil, der sich aus dem Ablösen und/oder der Zerstörung des Montagekontrollelements ergibt, ist, dass das Montagekontrollelement restlos von dem Befestigungselement entfernt werden kann und einem Einziehen des zweiten Endbereichs in den Untergrund nicht mehr entgegensteht. Das Montagekontrollelement erfüllt somit seinen Zweck, also das Verhindern des Eindringens des zweiten Endbereichs in den Untergrund, nur so lange bis die bestimmte Verankerungskraft aufgebracht wird. Zeigt das Montagekontrollelement an, dass die bestimmte Verankerungskraft durch die Verankerung des ersten Endbereichs in dem Untergrund aufgebracht wird, so setzt sie dem Eindringen des zweiten Endbereichs in den Untergrund keinen Widerstand mehr entgegen. Dies kann durch das Ablösen von dem Befestigungselement und/oder das Zerstört werden wirkungsvoll erreicht werden. Jedoch kann dies auch ermöglicht werden ohne, dass das Montagekontrollelement von dem Befestigungselement entfernt wird oder es zerstört wird. So kann das Montagekontrollelement in einigen Beispielen lediglich aus einer fixierten Position auf dem Befestigungselement gelöst werden. Beispielsweise kann das Montagekontrollelement auf dem Befestigungselement verbleiben und in einem Zwischenbereich zwischen dem Untergrund und einem Teil des zweiten Endbereichs, beispielsweise einem Kopf des Befestigungselements, gehalten werden. Indem das Montagekontrollelement an dem Befestigungselement verbleibt, kann das Montagekontrollelement die dichtenden Eigenschaften des verankerten Befestigungselements verbessern. Dabei kann das Montagekontrollelement beispielsweise angepasst sein Wärmebrücken zu vermeiden, indem es den Untergrund thermisch gegenüber dem Befestigungselement isoliert. Es kann auch dazu dienen, Dübelhülsen vor dem Eindringen von Feuchtigkeit zu schützen.

In einer weiteren bevorzugten Ausführungsform des erfindungsgemäßen Befestigungselements kann das Montagekontrollelement eine Sollbruchstelle aufweisen. Eine Sollbruchstelle kann beispielsweise ein Bereich des Montagekontrollelements sein, der beim Einwirken einer Kraft auf das Montagekontrollelement beschädigt wird. Eine Beschädigung kann eine Zerstörung sein wie beispielsweise ein Brechen oder Reißen, insbesondere ein Abreißen oder ein Aufreißen. Beispielsweise kann die Sollbruchstelle eine Verdünnung des Materials, aus dem das Montagekontrollelement besteht, aufweisen, beispielsweise eine Rille oder einen Schlitz oder sogar eine Perforation. Diese Sollbruchstelle kann beispielsweise angepasst sein in Verbindung mit dem Erreichen der bestimmten Verankerungskraft zu einem definierten Zerstören des Montagekontrollelements führen.

Ein Vorteil, der sich aus der Ausgestaltung des Montagekontrollelements mit einer Sollbruchstelle ergibt, ist beispielsweise, dass die Zerstörung des Montagekontrollelements kontrolliert geschieht. Dies bedeutet, dass die Zerstörung gesteuert wird, indem das Montagekontrollelement nicht an einer beliebigen Stelle beschädigt wird sondern an einer dafür vorgesehenen Stelle, nämlich der Stelle, an der sich die Sollbruchstelle befindet. Darüber hinaus könnte die notwendige Kraft, die erforderlich ist, um das Montagekontrollelement zu zerstören, über die Sollbruchstelle eingestellt werden, beispielsweise über die Dicke des Materials. Dies schafft eine Möglichkeit zur Einstellung der bestimmten Verankerungskraft auf die geprüft werden soll.

Erfindungsgemäß ist das Montagekontrollelement fixiert, das bedeutet axial unbeweglich, an dem Befestigungselement angeordnet oder innerhalb eines bestimmten Bereichs frei beweglich an dem Befestigungselement angeordnet. Ist das Montagekontrollelement fixiert auf dem Befestigungselement angeordnet, kann sie beispielsweise in einem Abstand zu dem ersten Endbereich fixiert auf dem Befestigungselement angeordnet sein, der mit der Einzugstiefe des Befestigungselements korreliert. Ist sie innerhalb eines bestimmten Bereichs frei beweglich auf dem Befestigungselement angeordnet, so kann ein in Einzugsrichtung hinteres Ende des bestimmten Bereichs einen bestimmten Abstand zu dem ersten Endbereich aufweisen, der mit der Einzugstiefe des Befestigungselements korreliert.

Ein Vorteil aus der fixierten Anordnung des Montagekontrollelements an dem Befestigungselement ist, dass das Befestigungselement werkseitig mit dem Montagekontrollelement versehen werden kann und diese nicht verloren gehen kann. Vor der Montage muss das Befestigungselement daher nicht vorbereitet werden, sondern kann direkt verwendet werden. Ebenso kann die fixierte Anordnung dabei helfen einen Abstand zwischen dem ersten Endbereich und dem Montagekontrollelement festzulegen. Wird hingegen eine innerhalb eines Bereichs frei bewegliche Anordnung verwendet, so kann auch dies die Einstellung eines minimalen Abstands ermöglichen, indem der Bereich eine Grenze aufweist, die einen Abstand zu dem ersten Endbereich aufweist. Gleichzeitig ist das Montagekontrollelement ein Stück weit vor äußeren Einflüssen, wie beispielsweise einem Hängenbleiben oder Verkanten mit anderen Elementen, zum Beispiel während eines Transports geschützt, da das Montagekontrollelement zumindest teilweise beweglich ist. Das bedeutet das Montagekontrollelement wird nicht bereits beim Transport beschädigt.

In einer weiteren bevorzugten Ausführungsform des erfindungsgemäßen Befestigungselements kann der zweite Endbereich ein Gegenlager aufweisen. Das Gegenlager kann beispielsweise angepasst sein beim Einziehen des Befestigungselements in den Untergrund gegen das Montagekontrollelement gedrückt zu werden.

Ein Vorteil daran, dass der zweite Endbereich ein Gegenlager aufweist ist, dass die Zerstörung einem beweglich auf dem Befestigungselement angeordneten Montagekontrollelement erleichtert wird, indem das Montagekontrollelement beispielsweise zwischen dem Untergrund oder einem Hilfsmittel und dem Gegenlager zerquetscht werden kann.

In einer weiteren bevorzugten Ausführungsform des erfindungsgemäßen Befestigungselements besteht das Montagekontrollelement aus Kunststoff. Dabei kann das Montagekontrollelement auf das Befestigungselement aufgesteckt sein oder auf das Befestigungselement aufgespritzt sein. Ist das Montagekontrollelement auf das Befestigungselement aufgesteckt, so kann das Befestigungselement Erhebungen oder Vertiefungen aufweisen, die die Beweglichkeit des Montagekontrollelements auf dem Befestigungselement auf einen bestimmten Bereich begrenzen.

Ein Vorteil in der Ausgestaltung des Montagekontrollelements aus Kunststoff ist ein einfacher Herstellungsprozess, der sowohl direkt auf dem Befestigungselement als auch als Einzelteil erfolgen kann. Darüber hinaus sind zahlreiche Konfigurationen an Kunststoffen denkbar und über Dichte und Beschaffenheit des verwendeten Kunststoffs ist es beispielsweise möglich die bestimmte Verankerungskraft, die notwendig ist, um das Montagekontrollelement von dem Befestigungselement abzulösen oder zu zerstören, genau einzustellen.

In einer weiteren bevorzugten Ausführungsform des erfindungsgemäßen Befestigungselements besteht das Befestigungselement aus Kunststoff. Das Befestigungselement kann jedoch auch aus einem Metall bestehen.

Ein Vorteil in der Ausgestaltung des Befestigungselements aus Kunststoff ist, dass der Kunststoff vorteilhafte Wärmedämmungseigenschaften haben kann und dadurch Wärmebrücken in dem Untergrund vermieden werden können. Weiter kann der Herstellungsprozess vereinfacht werden. In einem Beispiel werden sowohl das Montagekontrollelement als auch das Befestigungselement aus Kunststoff hergestellt. Beispielsweise können das Befestigungselement und das Montagekontrollelement einstückig hergestellt werden. In einer einstückigen Herstellung kann das Befestigungselement beispielsweise in zumindest einem Teilbereich des zweiten Endbereichs in das Montagekontrollelement übergehen. Beispielsweise kann dieser Teilbereich des zweiten Endbereichs als Sollbruchstelle ausgestaltet sein. Eine Ausgestaltung des Teilbereichs des zweiten Endbereichs als Sollbruchstelle ermöglicht ein definiertes Ablösen des Montagekontrollelements von dem Befestigungselement zum Beispiel, wenn beim Einziehen des Befestigungselements in einen Untergrund eine bestimmte Verankerungskraft vorliegt. Eine Ausgestaltung des Befestigungselements aus Metall kann hingegen von Vorteil sein, wenn das Befestigungselement großen Kräften ausgesetzt werden soll oder wenn erwartet werden kann, dass große Kräfte auf das Befestigungselement ausgeübt werden. Beispielsweise können Metalle stabiler gegen Verformung unter Krafteinwirkung sein als Kunststoffe.

In einer weiteren bevorzugten Ausführungsform des erfindungsgemäßen Befestigungselements ist ein Kopf an dem zweiten Endbereich des Befestigungselements angeordnet. Der Kopf kann an dem zweiten Endbereich angeordnet sein oder sich in Einzugsrichtung hinter dem zweiten Endbereich befinden. Der Kopf kann als Senkkopf ausgestaltet sein, um während der Montage in den Untergrund einzudringen, oder nach erfolgter Montage des Befestigungselements zumindest teilweise aus dem Untergrund herausragen. An dem Kopf kann sich eine Aufnahme befinden, welche angepasst ist ein Setzwerkzeug zumindest teilweise aufzunehmen. Die Aufnahme kann angepasst sein, eine Kraft von dem Setzwerkzeug auf das Befestigungselement zu übertragen. Dabei kann das Setzwerkzeug eine Drehbewegung ausführen und die Drehbewegung des Setzwerkzeugs auf das Befestigungselement übertragen werden. Eine solche Drehbewegung kann beispielsweise ein Einschrauben sein.

Wenn das Befestigungselement einen Kopf aufweist, kann dies von Vorteil für die Montage sein. Beispielsweise kann der Kopf als ein Angriffspunkt für ein Werkzeug dienen, welches verwendet wird, um das Befestigungselement in den Untergrund einzubringen.

In einer weiteren bevorzugten Ausführungsform ist das Befestigungselement angepasst mittels eines Setzwerkzeugs in einen Untergrund eingebracht zu werden. Das Setzwerkzeug kann dabei angepasst sein zumindest teilweise in eine Aufnahme, welche an dem Befestigungselement angeordnet ist, eingebracht zu werden oder diese Aufnahme zu umschließen. Weiter kann das Setzwerkzeug angepasst sein eine Antriebskraft auf das Befestigungselement zu übertragen, wobei die Antriebskraft einen Vortrieb des Befestigungselements in den Untergrund in Einzugsrichtung zur Folge hat.

Ein Vorteil der Montage des Befestigungselements mittels eines Setzwerkzeugs kann sein, dass eine einfache und sichere Montage erfolgen kann. Beispielsweise kann das Setzwerkzeug angepasst sein eine Antriebskraft effektiv auf das Befestigungselement zu übertragen.

Weiter wird die vorliegende Aufgabe auch durch ein Verfahren gemäß Anspruch 9 gelöst. Das Befestigungselement kann bei der Montage beispielsweise direkt oder indirekt in dem Untergrund montiert werden. Im Fall einer direkten Montage kann das Befestigungselement beim zumindest teilweisen Einziehen des ersten Endbereichs des Befestigungselements in den Untergrund beispielsweise so weit in den Untergrund eingezogen werden, bis das an dem zweiten Endbereich des Befestigungselements angeordnete Montagekontrollelement mit einer dem Untergrund zugewandten Seite zumindest teilweise an dem Untergrund anliegt. Wird das Befestigungselement indirekt in dem Untergrund montiert und für diese indirekte Montage ein Hilfsmittel verwendet, kann das Befestigungselement beim zumindest teilweisen Einziehen des ersten Endbereichs des Befestigungselements in das Hilfsmittel beispielsweise so weit in das Hilfsmittel eingezogen werden bis das an dem zweiten Endbereich des Befestigungselements angeordnete Montagekontrollelement mit einer dem Hilfsmittel zugewandten Seite zumindest teilweise an dem Hilfsmittel anliegt.

Die beigefügten Zeichnungen veranschaulichen das erfindungsgemäße Befestigungselement und das Verfahren zum Setzen des erfindungsgemäßen Befestigungselementes mittels eines Ausführungsbeispiels. Es zeigen:
- Figur 1: Darstellung eines Ausführungsbeispiels eines erfindungsgemäßen Befestigungselements,
- Figur 2a, 2b: Darstellungen zweier Ausführungsbeispiels des Montagekontrollelements eines erfindungsgemäßen Befestigungselements,
- Figur 3a, 3b: Darstellung eines Einziehens eines Ausführungsbeispiels eines erfindungsgemäßen Befestigungselements in einen Untergrund,
- Figur 4a-d: Perspektivische Darstellung einer Montage eines Ausführungsbeispiels eines erfindungsgemäßen Befestigungselements in einem Untergrund,
- Figur 5a, 5b: Darstellung einer Montage eines weiteren Ausführungsbeispiels eines erfindungsgemäßen Befestigungselements in einem Untergrund inklusive Darstellung eines beispielhaften Dübels, und
- Figur 6a-c: Ausschnittsweise Darstellung einer Montage eines weiteren Ausführungsbeispiels eines erfindungsgemäßen Befestigungselements unter Verwendung eines Tellerdübels.

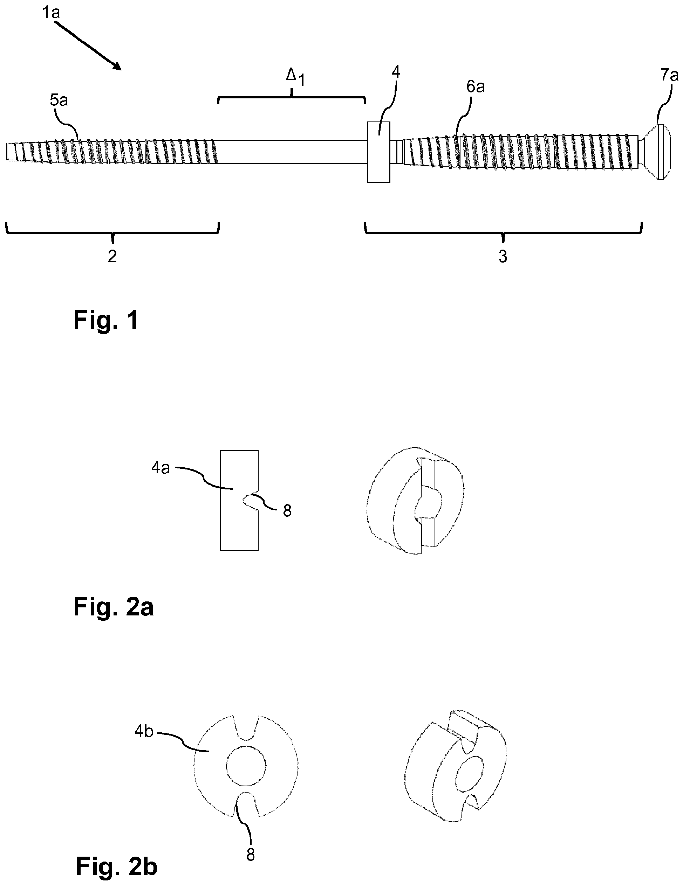

Figur 1 zeigt eine Darstellung eines Ausführungsbeispiels des erfindungsgemäßen Befestigungselements 1a. In diesem Ausführungsbeispiel weist das Befestigungselement 1a einen ersten Endbereich 2 und einen zweiten Endbereich 3 auf.

Der erste Endbereich 2 weist in diesem Ausführungsbeispiel auf ein erstes Gewinde oder Spreizmittel 5a zum Einbringen in den Untergrund beziehungsweise zum Spreizen des Untergrunds oder einer sich darin befindlichen Spreizzone eines Hilfsmittels, beispielsweise eines Dübels. Der Dübel kann eine Dübelhülse aufweisen. Um die Beschreibung der nachfolgenden Figuren einfach zu halten wird im Folgenden lediglich der Begriff Dübelhülse verallgemeinernd für jede Art von Hilfsmittel, das geeignet ist ein Befestigungselement aufzunehmen, verwendet. Dies bedeutet nicht, dass die Beschreibung auf Dübelhülsen im engeren Sinn beschränkt ist, sondern schließt jede Art von Hilfsmittel ein, die geeignet ist eine indirekte Verankerung des Befestigungselements zu ermöglichen.

Der zweite Endbereich 3 weist auf ein Montagekontrollelement 4 und ein zweites Gewinde oder Spreizmittel 6a. Dabei ist as Montagekontrollelement 4 in einem Abstand Δ₁ zum ersten Endbereich 2 an dem Befestigungselement 1a angebracht. Weiter weist das Befestigungselement 1a einen Kopf 7a auf. Dieser Kopf 7a kann Teil des zweiten Endbereichs 3 sein oder sich in Einzugsrichtung hinter dem zweiten Endbereich 3 befinden. Der Kopf 7a kann beispielsweise eine Aufnahme aufweisen, um ein Setzwerkzeug aufzunehmen und ein einfaches Setzen des Befestigungselements 1a ermöglichen. Der Kopf 7a kann als Senkkopf ausgestaltet sein oder nach dem Setzen von dem Untergrund abstehen.

Figuren 2a und 2b zeigen Darstellungen zweier Ausführungsbeispiele des Montagekontrollelements 4a, 4b des erfindungsgemäßen Befestigungselements 1a. In diesen Ausführungsbeispielen besitzt das Montagekontrollelement 4a, 4b eine im Wesentlichen zylindrische, insbesondere hohlzylindrische, Form mit einer Bohrung. Jedoch ist die vorliegende Erfindung nicht auf hohlzylindrische oder zylindrische Formen beschränkt. Vielmehr sind beliebige geometrische Formen umfasst und die hohlzylindrische Form lediglich für eine einfache Darstellung gewählt worden.

Typischerweise ist die Größe des Montagekontrollelements 4, beispielsweise repräsentiert durch den Außendurchmesser des Hohlzylinders 4a, 4b, so groß gewählt, dass des Montagekontrollelement 4 einen größeren Durchmesser hat als das Befestigungselement 1a und einen größeren Durchmesser hat als eine potentiell im Untergrund vorhandene Vertiefung, beispielsweise eine Bohrung oder ein Bohrloch, in welches das Befestigungselement 1a eingebracht wird.

Dadurch trifft das Montagekontrollelement 4 beim Verankern auf den Untergrund und liegt mit einer dem Untergrund zugewandten Seite an dem Untergrund an. In einem Ausführungsbeispiel, in der das Befestigungselement 1a zum Einbringen in eine Dübelhülse angepasst ist, kann die Größe des Montagekontrollelements 4, insbesondere der Außendurchmesser des Hohlzylinders 4a, 4b, so gewählt sein, dass das Montagekontrollelement 4 beim Einziehen gegen die Dübehülse, beispielsweise einen Kopf der Dübelhülse, trifft und an der Dübelhülse anliegt. Weiter kann das Montagekontrollelement 4 angepasst sein, dass ihre Größe die Größe der Dübelhülse nicht übersteigt, beispielsweise können das Montagekontrollelement 4 und die Dübelhülse einen ähnlichen oder gleichen Außendurchmesser aufweisen.

Beide gezeigten Ausführungsbeispiele d Montagekontrollelements 4a, 4b weisen mindestens eine Sollbruchstelle 8 auf. Wie in den Figuren 2a und 2b dargestellt, kann sich die mindestens eine Sollbruchstelle 8 durch einen Bereich auszeichnen, der dünner ausgestaltet ist als die angrenzenden Bereiche des Montagekontrollelements 4. Beispielsweise kann das Montagekontrollelement 4 einen runden Querschnitt mit einem bestimmten Durchmesser aufweisen. Eine Sollbruchstelle 8 des Montagekontrollelements 4 könnte dann beispielsweise einen geringeren Durchmesser aufweisen als andere Bereiche des Montagekontrollelements 4. Die mindestens eine Sollbruchstelle 8 kann beispielsweise als Vertiefung oder Rille ausgebildet sein.

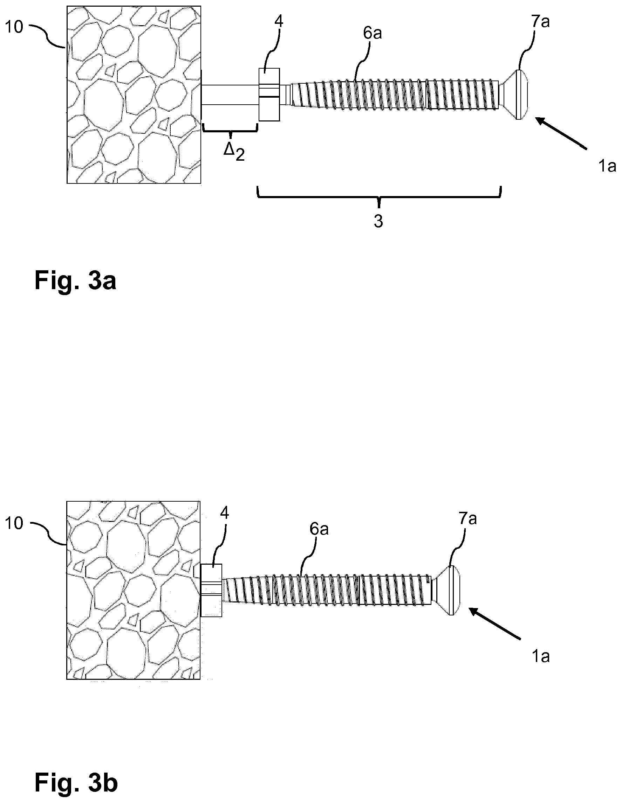

Figuren 3a und 3b zeigen Darstellungen eines Ausführungsbeispiels eines Einziehens des erfindungsgemäßen Befestigungselements 1a in einen Untergrund 10.

Figur 3a zeigt einen Ausschnitt eines Untergrunds 10 mit einem eingesetzten Befestigungselement 1a. Von dem Befestigungselement 1a ragt der zweite Endbereich 3 in Figur 3a aus dem Untergrund 10 heraus. Figur 3a zeigt beispielsweise den Zustand unmittelbar bevor der erste Endbereich 2 in dem Untergrund 10 verankert wird. Beispielsweise kann sich der erste Endbereich 2 bereits in dem Untergrund 10 befinden, aber noch nicht verankert worden sein, beispielsweise weil er noch nicht in die Spreizzone einer Dübelhülse eingedrungen ist. In diesem Zustand weist das Montagekontrollelement 4 einen Abstand Δ₂ zum Untergrund 10 auf. Dieser Abstand Δ₂ kann mit einer Einzugstiefe des ersten Endbereichs 2 in den Untergrund 10 korrelieren, der notwendig ist, um eine bestimmte Verankerungskraft des Befestigungselements 1a im Untergrund 10 aufzubringen. Wird das Befestigungselement 1a in den Untergrund 10 hineingezogen, so wird der Abstand Δ₂, der in einem ausreichend dichten und zur Verankerung geeigneten Untergrund 10 für eine bestimmte oder ausreichende Verankerungskraft notwendig ist, überwunden.

Der Abstand Δ₂ kann beispielsweise mit dem Abstand Δ₁, der den Abstand zwischen dem Montagekontrollelement 4 und dem ersten Endbereich 2 beschreibt, korrelieren. Beispielsweise kann der Abstand Δ₂ gleich dem Abstand Δ₁ sein oder Teilbereich des Abstands Δ₁ sein. Der Abstand Δ₂ kann auch dadurch mit dem Abstand Δ₁ korrelieren, indem er von der Wahl des Abstands Δ₁ abhängig ist.

In Figur 3b ist gezeigt, wie der Abstand Δ₂ überwunden wurde und das Montagekontrollelement 4 nun mit einer dem Untergrund 10 zugewandten Seite an dem Untergrund 10 anliegt. Ist die Verankerungskraft, die durch die Verankerung des ersten Endbereichs 2 in dem Untergrund 10 aufgebracht wird, gleich oder größer als die bestimmte Verankerungskraft, wird ein weiteres Einziehen des Befestigungselements 1a in den Untergrund 10 ermöglicht und das Befestigungselement 1a erfährt bei diesem weiteren Einziehen einen Vortrieb, der ausreichend ist, um das Montagekontrollelement 4 von dem Befestigungselement 1a abzulösen oder zu zerstören und ein Eindringen des zweiten Endbereichs 3 in den Untergrund 10 ermöglicht. Beispielsweise kann der zweite Endbereich 3 zumindest teilweise als Gegenlager ausgestaltet sein, welches angepasst ist, das Montagekontrollelement zwischen dem Untergrund und dem Gegenlager bei einem weiteren Vortrieb des Befestigungselements zu zerquetschen. Das Gegenlager kann beispielsweise auch dadurch gebildet werden, dass das an dem zweiten Endbereich 3 angeordnete Spreizmittel 6a einen größeren Auendurchmesser aufweist als das Befestigungselement an der Stelle, an der das Montagekontrollelement angeordnet ist.

Wird die bestimmte Verankerungskraft nicht aufgebracht, wird durch das Einziehen des ersten Endbereichs 2 in den Untergrund 10 entweder kein Vortrieb des Befestigungselements 1a erzeugt oder nur ein Vortrieb erzeugt, der nicht ausreichend ist, damit sich das Montagekontrollelement 4 von dem Befestigungselement 1a ablöst oder zerstört wird. Das Montagekontrollelement 4 hält daher ihre Sperrwirkung gegen ein Eindringen des zweiten Endbereichs 3 in den Untergrund 10 aufrecht. Ein bestimmungsgemäßes Setzen des Befestigungselements 1a wird in einem solchen Fall durch das Montagekontrollelement 4 verhindert, indem sie anzeigt, dass die bestimmte Verankerungskraft nicht aufgebracht wird. Dies bedeutet, dass die Verankerungskraft nicht groß genug ist, um das Befestigungselement 1a in dem Untergrund 10 wirkungsvoll zu verankern. In einem solchen Fall ist sehr wahrscheinlich, dass das Befestigungselement 1a, wenn es an dieser Stelle vollständig in dem Untergrund 10 montiert werden würde, keine ausreichende Verankerungskraft erfahren würde und daher die Montage nicht geeignet wäre, damit das Befestigungselement 1a seiner bestimmungsgemäßen Aufgabe, zum Beispiel dem Tragen von Lasten, dem Abstützen oder Sichern von Teilbereichen eines Untergrund 10, nachgehen kann.

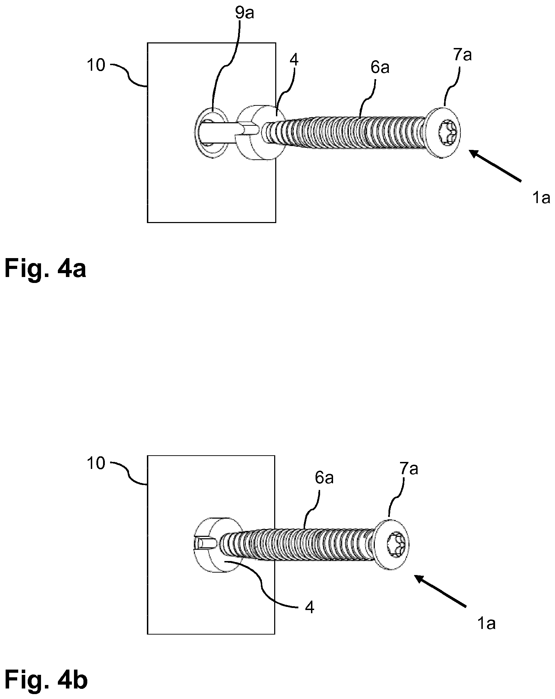

Figuren 4a bis 4d zeigen perspektivische Darstellungen eines Ausführungsbeispiels einer Montage des erfindungsgemäßen Befestigungselements 1 in einen Untergrund 10, wobei das Befestigungselement 1a in eine in den Untergrund 10 eingebrachte Dübelhülse 9 eingebracht wird.

In den Figuren 4a bis 4c sieht man eine in den Untergrund 10 eingesetzte Dübelhülse 9a, beziehungsweise ihr hinteres Ende, welches zumindest teilweise aus dem Untergrund 10 herausragt. Wird das Befestigungselement 1a in den Untergrund 10 gesetzt, so können die Dübelhülse 9a und das Montagekontrollelement 4 so ausgestaltet sein, dass das Montagekontrollelement 4 beim Einziehen des Befestigungselements 1a in den Untergrund 10 gegen das hintere Ende der Dübelhülse 9a gedrückt wird. Das Montagekontrollelement 4 und die Dübelhülse 9a können beispielsweise aus dem gleichen Material oder Materialien mit ähnlichen Eigenschaften bestehen. In diesem Fall erfährt das Montagekontrollelement 4 eine nur geringe Haftreibung wenn sie auf das hintere Ende der Dübelhülse 9a trifft. Dadurch kann beispielsweise sichergestellt werden, dass das Montagekontrollelement 4 nicht deswegen zerstört wird, weil sie durch Haftreibung zwischen dem Montagekontrollelement 4 und dem hinteren Ende der Dübelhülse 9a beschädigt wird. Die Materialien ermöglichen somit ein Gleiten des Montagekontrollelements 4 über das hintere Ende der Dübelhülse 9a.

Figur 4a zeigt einen anfänglichen Zustand des Setzvorgangs ähnlich zu Figur 3a. Dieser Zustand ist dadurch ausgezeichnet, dass das Befestigungselement 1a in die vorbereitete Dübelhülse 9a hineingesteckt wurde, aber noch kein Einziehen des ersten Endbereichs 2 in eine Spreizzone der Dübelhülse 9a zu Zwecken der Verankerung stattgefunden hat. Ausgehend von diesem Startpunkt kann das Befestigungselement 1a in die Dübelhülse 9a beziehungsweise in den Untergrund 10 durch Drehung eingezogen werden, so dass der Abstand Δ₂ wie in Figur 3a gezeigt überwunden werden kann bis das Montagekontrollelement 4 an dem Kopf der Dübelhülse 9a anliegt. Das Montagekontrollelement 4 wie es in Figur 4a gezeigt ist, kann beispielsweise das Montagekontrollelement 4b aus Figur 2b sein.

Figur 4b zeigt einen späteren Zustand des Setzvorgangs ähnlich zu Figur 3b, bei dem der Abstand Δ₂ überwunden wurde und das Befestigungselement 1a bereit ist, um eine Überprüfung der Verankerungskraft vorzunehmen. Das Montagekontrollelement 4 liegt auf dem Kopf der Dübelhülse 9a an und setzt einem weiteren Einziehen des Befestigungselements, insbesondere einem Einziehen des zweiten Endbereichs 3 in die Dübelhülse 9a, einen Widerstand entgegen. Ist die Verankerungskraft des Befestigungselements 1a aufgebracht durch die Verankerung des ersten Teilbereichs in der Spreizzone der Dübelhülse 9a gleich oder größer als die bestimmte Verankerungskraft, finden die Dübelhülse 9a und das Befestigungselement 1a ausreichend Halt in dem Untergrund 10 und das Befestigungselement 1a erfährt einen weiteren Vortrieb. Dieser Vortrieb ist dann groß genug, so dass das Montagekontrollelement 4 an der Sollbruchstelle 8 zerstört wird und von dem Befestigungselement 1a abfällt.

Ist die Verankerungskraft nicht groß genug, so wird die bestimmte Verankerungskraft nicht erreicht und das Befestigungselement 1a erfährt keinen ausreichenden Vortrieb. In diesem Fall wird das Befestigungselement 1a nicht weiter in die Dübelhülse 9a beziehungsweise den Untergrund 10 hineingezogen, weil das Montagekontrollelement 4 ein weiteres Einziehen verhindert. Es kann auch gesagt werden, dass das Befestigungselement durchdreht und nicht packt. Da die Verankerungskraft nicht die bestimmte Verankerungskraft erreicht, die für einen ausreichenden Halt notwendig ist, wird kein Vortrieb erzeugt, der ein Ablösen oder ein Zerstören des Montagekontrollelements 4 zur Folge hat. Somit hält das Montagekontrollelement 4 ihre Sperrwirkung gegen ein Eindringen des zweiten Endbereichs 3 in den Untergrund 10 aufrecht. Erfolgt das Einbringen des Befestigungselements 1a in den Untergrund 10 beispielsweise durch eine Schraubbewegung oder Drehbewegung, so lässt sich das Befestigungselement 1a zwar weiterhin drehen, es fehlt jedoch an einem Vortrieb, der gegen den Widerstand wirkt, den das Montagekontrollelement 4 dem Einziehen entgegensetzt. Je nachdem ob das Montagekontrollelement 4 an dem Befestigungselement 1a fixiert oder lediglich aufgesteckt ist, kann sie sich drehend gegen die Dübelhülse 9a beziehungsweise gegen den Untergrund 10 oder auch von der Drehbewegung des Befestigungselements 1a unbeeinflusst bleiben.

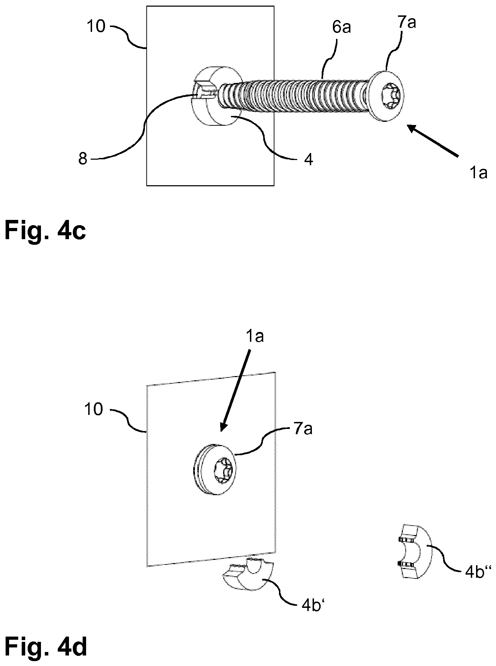

Figur 4c zeigt den Fall, dass die bestimmte Verankerungskraft des Befestigungselements 1a im Untergrund 10 ausreichend ist. Der Vortrieb, den das Befestigungselement 1a durch das weitere Einziehen des ersten Endbereichs in den Untergrund 10 erfährt, ist ausreichend, um dazu zu führen, dass sich das Montagekontrollelement 4 vom Befestigungselement 1a ablöst. Dies ist in Figur 4c dadurch dargestellt, dass die Sollbruchstelle 8 des Montagekontrollelements 4 aufbricht und so zu einer Zerstörung des Montagekontrollelements 4 führt. Ist das Montagekontrollelement 4 zerstört, so ermöglicht sie ein Einziehen des zweiten Endbereichs 3 in den Untergrund 10. Durch das Zerstören des Montagekontrollelements 4 entfällt die Sperrwirkung beziehungsweise der Widerstand, den das Montagekontrollelement 4 dem Einziehen des zweiten Endbereichs 3 in den Untergrund 10 entgegensetzt.

Figur 4d zeigt den abgeschlossenen Setzvorgang. In diesem Zustand ist das Montagekontrollelement 4 zerstört und von dem Befestigungselement 1a abgefallen. Dabei zeigt Figur 4d beispielhaft, wie das Montagekontrollelement 4 in zwei Teile 4b' und 4b" zerbrochen ist, die von dem Befestigungselement 1a abgefallen sind.

Der zweite Endbereich 3 ist durch den Vortrieb des Befestigungselements 1a weiter in den Untergrund 10 eingezogen worden und lediglich der Kopf 7a des Befestigungselements 1a ragt aus dem Untergrund 10 hervor. In einem anderen Ausführungsbeispiel kann der Kopf 7a des Befestigungselements 1a als Senkkopf ausgestaltet sein und ebenfalls in den Untergrund 10 eingezogen werden.

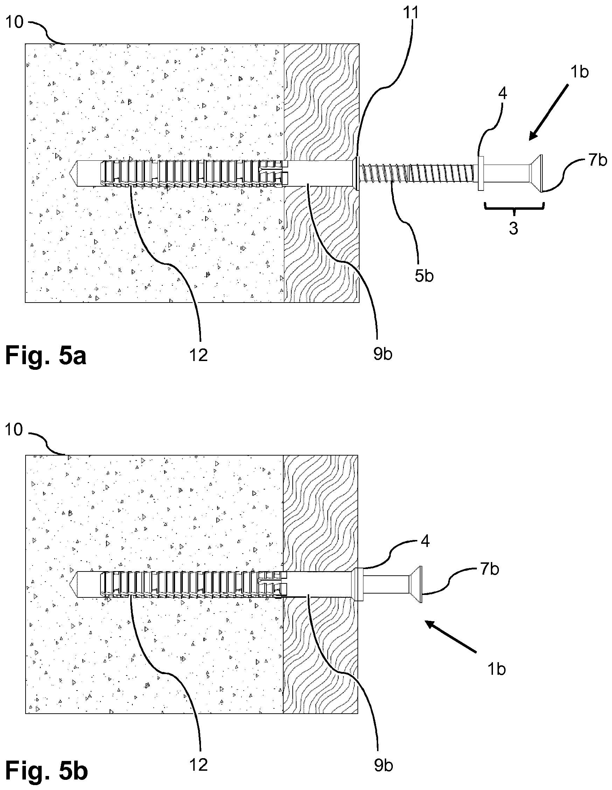

Figuren 5a und 5b zeigen Darstellungen einer Montage eines weiteren Ausführungsbeispiels eines erfindungsgemäßen Befestigungselements 1b in einem Untergrund 10 mit Hilfe eines Dübels 9b. Somit zeigen die Figuren 5a und 5b eine indirekte Montage eines erfindungsgemäßen Befestigungselements in einem Untergrund.

Die Figuren 5a und 5b betreffen den Anwendungsfall der Montagekontrolle in einem Standardmauerwerk. In der Darstellung der Figuren 5a und 5b ist für den Untergrund 10 eine Darstellung bestehend aus mehreren Schichten gewählt worden. Dies ist jedoch lediglich eine Darstellung eines typischen Anwendungsfalls. Der Untergrund 10 kann ebenso aus einer einzelnen Schicht gebildet sein.

Figur 5a zeigt, dass ein Dübel 9b in den Untergrund 10 eingesetzt ist. Weiter ist ein Befestigungselement 1b in den Dübel 9b eingebracht. Das Befestigungselement 1b weist einen ersten Endbereich auf, der sich teilweise in dem Dübel 9b befindet und als ein erstes Spreizmittel 5b ausgebildet ist. Das erste Spreizmittel 5b ist in dem hier gezeigten Ausführungsbeispiel als Gewindeabschnitte mit unterschiedlichen Steigungen gezeigt. Darüber hinaus weist das Befestigungselement 1b einen zweiten Endbereich 3 auf, der über einen Kopf 7b verfügt. An dem Kopf 7b kann ein Setzwerkzeug angreifen, was das Befestigungselement 1b in eine Rotation versetzen kann, die einen Vortrieb in den Dübel 9b hinein ermöglicht, wenn das erste Spreizmittel 5b Halt in dem Dübel 9b findet. Mittels eines derartigen Vortriebs kann das Befestigungselement 1b in den Dübel 9b hineinbewegt werden und so das Befestigungselement 1b in dem Untergrund 10 montiert werden. Darüber hinaus ist an dem Befestigungselement 1b ein Montagekontrollelement 4 angeordnet. Typischerweise ist das Montagekontrollelement 4 angeordnet wie dargestellt zwischen dem ersten Endbereich repräsentiert durch das erste Spreizmittel 5b und den zweiten Endbereich 3.

Bei der indirekten Montage des Befestigungselements 1b in dem Untergrund 10 wird das Befestigungselement 1b indirekt in dem Untergrund 10 verankert, wobei das erste Spreizmittel 5b des Befestigungselements bei einem durch den Vortrieb des Befestigungselements 1b verursachten weiteren Eindringen angepasst ist den Dübel 9b zu verformen, um eine Verankerungskraft in dem Untergrund 10 aufzubauen. Die Verankerungskraft kann beispielsweise dadurch aufgebracht werden, dass das erste Spreizmittel 5b eine erste Spreizzone 12 des Dübels 9b verformt, beispielsweise, indem die Spreizzone 12 gespreizt wird. Ein Spreizen der Spreizzone 12 kann beispielsweise daraus bestehen, dass das Material der ersten Spreizzone 12 durch das erste Spreizmittel 5b im Wesentlichen radial nach außen verdrängt wird, so dass eine Verankerungskraft aufgebracht wird.

Der Vortrieb des Befestigungselements 1b hinein in den Untergrund führt ebenfalls dazu, dass das Montagekontrollelement 4 in Richtung des Untergrunds 10 auf den Dübel 9b zubewegt wird. Dies kann solange geschehen bis das Montagekontrollelement 4 an dem Untergrund 10 oder wie in der Abbildung dargestellt an einem Kopf 11 des Dübels 9b anliegt wie in Figur 5b dargestellt.

In Figur 5b ist das Befestigungselement 1b so weit in den Dübel 9b eingedrungen, dass das Montagekontrollelement 4 an dem Kopf 11 des Dübels 9b anliegt. In dieser Konfiguration verhindert das Montagekontrollelement 4 ein weiteres Eindringen des Befestigungselements 1b. Insbesondere verhindert das Montagekontrollelement 4 in dieser Konfiguration ein Einziehen des zweiten Endbereichs 3 in den Dübel 9b.

Wird durch die Verankerung des ersten Spreizmittels 5b in der ersten Spreizzone 12 des Dübels 9b jedoch eine bestimmte Verankerungskraft aufgebracht, ist der Vortrieb ausreichend, um das Montagekontrollelement 4, welches beispielsweise fixiert auf dem Befestigungselement 1b angeordnet ist, von dem Befestigungselement 1b zu lösen. Dies bedeutet, dass die Fixierung des Montagekontrollelements 4 gelöst werden kann und das Montagekontrollelement 4 auf dem Befestigungselement 1b verschiebbar ist. Dadurch kann das Montagekontrollelement 4 beispielsweise von dem Befestigungselement 1b abgelöst werden, beispielsweise indem es beim Vortrieb durch Kontakt mit dem Kopf 11 des Dübels 9b aus einer fixierten Position an dem Befestigungselement 1b herausgeschoben wird. Dann kann das Montagekontrollelement 4 beispielsweise von dem Befestigungselement 1b abgeschoben werden oder zwischen dem Kopf 11 des Dübels 9b und einem Teilbereich des zweiten Endbereichs 3 zerquetscht werden und von dem Befestigungselement 1b abfallen. Das Montagekontrollelement 4 kann jedoch auch eine Sollbruchstelle aufweisen, die bei ausreichendem Vortrieb und Kontakt mit dem Kopf 11 des Dübels 9b bricht und dazu führt, dass das Montagekontrollelement 4 aus der fixierten Position an dem Befestigungselement 1b herausgeschoben wird. Das Brechen einer Sollbruchstelle kann jedoch auch dazu führen, dass das Montagekontrollelement 4 von dem Befestigungselement 1b abfällt.

Das Montagekontrollelement 4 kann jedoch auch auf dem Befestigungselement 1b verbleiben und nach einem zumindest teilweisen Einziehen des zweiten Endbereichs 3 in den Dübel 9b als Dichtung zwischen dem Dübel 9b und dem Kopf 7b des Befestigungselements 1b zu dienen, so dass keine Feuchtigkeit in den Dübel 9b eindringen kann.

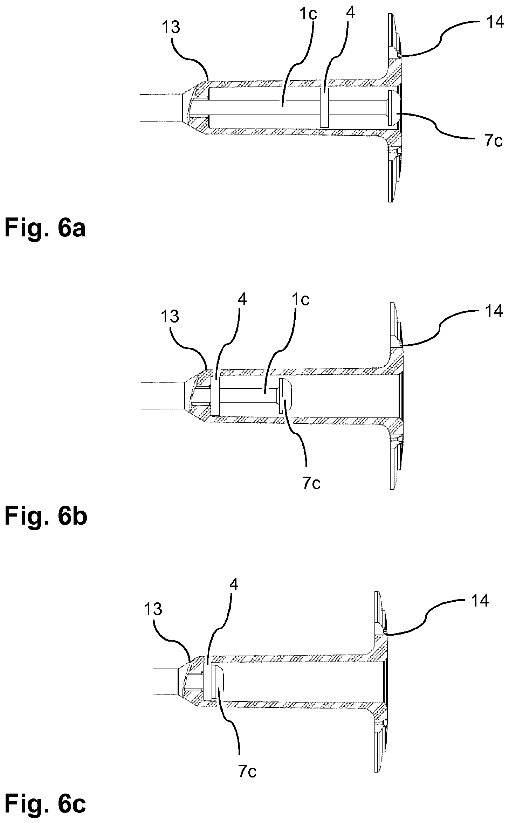

Figuren 6a bis 6c zeigen die ausschnittsweise Darstellung einer Montage eines weiteren Ausführungsbeispiels eines erfindungsgemäßen Befestigungselements 1c unter Verwendung eines Tellerdübels.

Der ausschnittsweise in den Figuren 6a bis 6c gezeigte Tellerdübel weist eine Dübelhülse 13 und einen Druckteller 14 auf. Ein derartiger Druckteller 14 kann beispielsweise verwendet werden, um einen Dämmstoff zu halten, beispielsweise im Fall der Anwendung in einem Wärmedämmungsverbundsystem.

Der Ausschnitt, der in den Figuren 6a bis 6c dargestellt ist, zeigt ein Eindringen eines Befestigungselements 1c in den Tellerdübel während einer Montage.

In Figur 6a ist ein anfänglicher Zustand gezeigt. In diesem Zustand kann das Befestigungselement 1c beispielsweise lose in den Tellerdübel hineingelegt sein. Dies bedeutet, dass das Befestigungselement 1c noch keinen Halt in dem Tellerdübel gefunden hat und ein Einziehen des Befestigungselements 1c, welches auf Vortrieb des Befestigungselements 1c basiert, noch nicht begonnen hat.

Figur 6b zeigt den Fall, dass das Befestigungselement 1c weiter in den Tellerdübel eingedrungen ist, beispielsweise durch einen Vortrieb, den das Befestigungselement 1c dadurch erfährt, dass ein erster Endbereich des Befestigungselements 1c Halt in der Dübelhülse 13 des Tellerdübels findet während das Befestigungselement 1s beispielsweise über eine an seinem Kopf 7c angreifende Kraft angetrieben wird. In dem Fall, der in Figur 6b dargestellt ist, verhindert ein Montagekontrollelement 4, welches an dem Befestigungselement 1c angeordnet ist, ein Einziehen eines zweiten Endbereichs des Befestigungselements 1c an dessen Ende sich der Kopf 7c des Befestigungselements 1c befindet. Das Montagekontrollelement 4 verhindert ein Einziehen des zweiten Endbereichs so lange bis eine bestimmte Verankerungskraft des ersten Endbereichs in der Dübelhülse 13 des Tellerdübels aufgebracht wird.

Wird die bestimmte Verankerungskraft aufgebracht, kann der zweite Endbereich zumindest teilweise in die Dübelhülse 13 des Tellerdübels eingezogen werden, indem das Montagekontrollelement 4 seine das Einziehen verhindernde Wirkung verliert. Dies kann beispielsweise dadurch geschehen, dass das Montagekontrollelement 4, welches ursprünglich fixiert auf dem Befestigungselement 1c angeordnet ist, gelöst wird und auf dem Befestigungselement beweglich wird. In manchen Ausführungsformen kann es vorteilhaft sein, wenn sich das Montagekontrollelement von dem Befestigungselement ablöst und abfällt, was entweder zerstörungsfrei oder unter Zerstörung des Montagekontrollelements 4 geschehen kann. In dem Fall, der in Figur 6c dargestellt ist, ist es jedoch vorteilhaft, wenn das Montagekontrollelement 4 lediglich auf dem Befestigungselement 1c verschoben wird. So kann das Montagekontrollelement 4 nach einer erfolgreichen Montage des Befestigungselements 1c unter Verwendung eines Tellerdübels einen Zwischenraum zwischen der Dübelhülse 13 des Tellerdübels und dem Kopf 7c des Befestigungselements 1c ausfüllen, was die Dichtungseigenschaften des montierten Systems verbessern kann.

Die obige Beschreibung enthält Ausführungsbeispiele von einer oder mehr Ausführungsformen der Erfindung. Selbstverständlich ist es nicht möglich jede denkbare Kombination der erfindungsgemäßen Komponenten und Verfahren in den zuvor genannten Ausführungsbeispielen zu beschreiben. Vielmehr wird ein Fachmann erkennen, dass es vielzählige weitere Kombinationen von weiteren Ausführungsformen gibt. Entsprechend sollen die beschriebenen Ausführungsbeispiele alle diese weiteren Kombinationen, Modifikationen, Variationen und Ausführungsformen umfassen, die unter den Geltungsbereich der angefügten Ansprüche fallen.

## Patentansprüche

1. Ein Befestigungselement (1a, 1b, 1c) zum Einbringen in einen Untergrund (10), das Befestigungselement (1a, 1b, 1c) aufweisend:
einen ersten Endbereich (2), wobei der erste Endbereich (2) angepasst ist zur Verankerung des Befestigungselements (1a, 1b, 1c) in dem Untergrund (10); und
einen zweiten Endbereich (3) mit einem fixiert daran angeordneten Montagekontrollelement (4, 4a, 4b), wobei das Montagekontrollelement (4, 4a, 4b) angepasst ist ein Einziehen des zweiten Endbereichs (3) des Befestigungselements (1a, 1b, 1c) in den Untergrund (10) beim Verankern zumindest solange zu verhindern bis eine bestimmte Verankerungskraft des Befestigungselements (1a, 1b, 1c) in dem Untergrund (10) erreicht wird und wobei das Montagekontrollelement (4, 4a, 4b) beim Überschreiten der bestimmten Verankerungskraft seine Position relativ zum zweiten Endbereich (3) durch Ablösen oder Verschieben verändert.

2. Das Befestigungselement (1a, 1b, 1c) gemäß Anspruch 1, wobei das Befestigungselement (1a, 1b, 1c) angepasst ist zum zumindest teilweisen Einbringen in eine Dübelhülse (9a, 9b), wobei die Dübelhülse (9a, 9b) zumindest eine erste Spreizzone aufweist und die erste Spreizzone angepasst ist in den Untergrund (10) eingebracht zu werden.

3. Das Befestigungselement (1a, 1b, 1c) gemäß einem der vorherigen Ansprüche, wobei der erste Endbereich (2) des Befestigungselements (1a, 1b, 1c) ausgestaltet ist ein erstes Spreizmittel (5a, 5b) zu bilden und der zweite Endbereich (3) angepasst ist zumindest teilweise ein zweites Spreizmittel (6a) zu bilden.

4. Das Befestigungselement (1a, 1b, 1c) gemäß Anspruch 3, wobei das Montagekontrollelement (4, 4a, 4b) an dem Befestigungselement (1a, 1b, 1c) zum Teil zwischen dem ersten Spreizmittel (5a, 5b) und dem zweiten Spreizmittel (6a) angeordnet ist.

5. Das Befestigungselement (1a, 1b, 1c) gemäß einem der vorherigen Ansprüche, wobei das Montagekontrollelement (4, 4a, 4b) in einem bestimmten Abstand zu dem ersten Endbereich (2) an dem Befestigungselement (1a, 1b, 1c) angeordnet ist und dieser Abstand mit einer Einzugstiefe des Befestigungselements (1a, 1b, 1c) in den Untergrund (10) korreliert.

6. Das Befestigungselement (1a, 1b, 1c) gemäß Anspruch 1, wobei das Montagekontrollelement (4, 4a, 4b) mindestens eine Sollbruchstelle (8) aufweist.

7. Das Befestigungselement (1a, 1b, 1c) gemäß einem der vorherigen Ansprüche, wobei der zweite Endbereich (3) ein Gegenlager aufweist.

8. Das Befestigungselement (1a, 1b, 1c) gemäß einem der vorherigen Ansprüche, wobei das Montagekontrollelement (4, 4a, 4b) angepasst ist das Befestigungselement (1a, 1b, 1c) zumindest teilweise gegen den Untergrund (10) abzudichten.

9. Ein Verfahren zur Montage eines Befestigungselements (1a, 1b, 1c) in einen Untergrund (10), das Verfahren aufweisend die Schritte von:
anfängliches Einziehen eines ersten Endbereichs (2) des Befestigungselements (1a, 1b, 1c) in den Untergrund (10);
Prüfen einer Verankerungskraft des Befestigungselements (1a, 1b, 1c) in dem Untergrund (10), wobei die Verankerungskraft des Befestigungselements (1a, 1b, 1c) ausreichend ist, wenn ein an einem zweiten Endbereich (3) des Befestigungselements (1a, 1b, 1c) fixiert angeordnetes Montagekontrollelement (4, 4a, 4b) seine Position relativ zu dem zweiten Endbereich (3) durch Ablösen oder Verschieben verändert und ein weiteres Einziehen des ersten Endbereichs (2) des Befestigungselements (1a, 1b, 1c) in den Untergrund (10) erfolgt, und die Verankerungskraft des Befestigungselements (1a, 1b, 1c) nicht ausreichend ist, wenn das Montagekontrollelement (4, 4a, 4b) seine Position relativ zu dem zweiten Endbereich (3) nicht verändert und ein Einziehen des zweiten Endbereichs (3) des Befestigungselements (1a, 1b, 1c) in den Untergrund (10) verhindert; und
zumindest teilweises Einziehen des zweiten Endbereichs (3) des Befestigungselements (1a, 1b, 1c) in den Untergrund (10), wenn die Verankerungskraft des Befestigungselements (1a, 1b, 1c) ausreichend ist.

## Claims

1. A fastening element (1a, 1b, 1c) for insertion into a substrate (10), the fastening element (1a, 1b, 1c) comprising:
a first end region (2), wherein the first end region (2) is adapted for anchoring the fastening element (1a, 1b, 1c) in the substrate (10); and a second end region (3) with an assembly control element (4, 4a, 4b) fixedly arranged thereon, wherein the assembly control element (4, 4a, 4b) is adapted to prevent the second end region (3) of the fastening element (1a, 1b, 1c) from drawing in into the substrate (10) during anchoring at least until a particular anchoring force of the fastening element (1a, 1b, 1c) in the substrate (10) is reached and wherein the assembly control element (4, 4a, 4b) changes its position relative to the second end region (3) by detaching or displacing when the particular anchoring force is exceeded.

2. The fastening element (1a, 1b, 1c) according to claim 1, wherein the fastening element (1a, 1b, 1c) is adapted for at least partial insertion into a dowel sleeve (9a, 9b), wherein the dowel sleeve (9a, 9b) comprises at least one first spreading zone and the first spreading zone is adapted to be inserted into the substrate (10).

3. The fastening element (1a, 1b, 1c) according to one of the preceding claims, wherein the first end region (2) of the fastening element (1a, 1b, 1c) is configured to form a first spreading means (5a, 5b) and the second end region (3) is adapted to at least partially form a second spreading means (6a).

4. The fastening element (1a, 1b, 1c) according to claim 3, wherein the assembly control element (4, 4a, 4b) is arranged on the fastening element (1a, 1b, 1c) partially between the first spreading means (5a, 5b) and the second spreading means (6a).

5. The fastening element (1a, 1b, 1c) according to one of the preceding claims, wherein the assembly control element (4, 4a, 4b) is arranged at a certain distance from the first end region (2) on the fastening element (1a, 1b, 1c) and this distance correlates with a draw-in depth of the fastening element (1a, 1b, 1c) into the substrate (10).

6. The fastening element (1a, 1b, 1c) according to claim 1, wherein the assembly control element (4, 4a, 4b) comprises at least one predetermined breaking point (8).

7. The fastening element (1a, 1b, 1c) according to one of the preceding claims, wherein the second end region (3) comprises a counter bearing.

8. The fastening element (1a, 1b, 1c) according to one of the preceding claims, wherein the assembly control element (4, 4a, 4b) is adapted to at least partially seal the fastening element (1a, 1b, 1c) against the substrate (10).

9. A method for assembling a fastening element (1a, 1b, 1c) into a substrate (10), the method comprising the steps of:
initially drawing in a first end region (2) of the fastening element (1a, 1b, 1c) into the substrate (10);
testing an anchoring force of the fastening element (1a, 1b, 1c) in the substrate (10), wherein the anchoring force of the fastening element (1a, 1b, 1c) is sufficient if an assembly control element (4, 4a, 4b) fixedly arranged on a second end region (3) of the fastening element (1a, 1b, 1c) changes its position relative to the second end region (3) by detaching or displacing and the first end region (2) of the fastening element (1a, 1b, 1c) is drawn further into the substrate (10), and the anchoring force of the fastening element (1a, 1b, 1c) is not sufficient if the assembly control element (4, 4a, 4b) does not change its position relative to the second end region (3) and prevents the second end region (3) of the fastening element (1a, 1b, 1c) from drawing in into the substrate (10); and
at least partially drawing in the second end region (3) of the fastening element (1a, 1b, 1c) into the substrate (10) if the anchoring force of the fastening element (1a, 1b, 1c) is sufficient.

## Revendications

1. Un élément de fixation (1a, 1b, 1c) à insérer dans un substrat (10), l'élément de fixation (1a, 1b, 1c) comprenant :
une première zone d'extrémité (2), dans lequel la première zone d'extrémité (2) est apte à ancrer l'élément de fixation (1a, 1b, 1c) dans le substrat (10) ; et
une seconde zone d'extrémité (3) avec un élément de contrôle de pose (4, 4a, 4b) disposé sur celui-ci de manière fixe, dans lequel l'élément de contrôle de pose (4, 4a, 4b) est apte à empêcher un enfoncement de la seconde zone d'extrémité (3) de l'élément de fixation (1a, 1b, 1c) dans le substrat (10) lors de l'ancrage au moins jusqu'à ce qu'une force d'ancrage déterminée de l'élément de fixation (1a, 1b, 1c) dans le substrat (10) soit atteinte, et dans lequel, en cas de dépassement de la force d'ancrage déterminée, l'élément de contrôle de pose (4, 4a, 4b) modifie sa position par rapport à la seconde zone d'extrémité (3) en se détachant ou en coulissant.

2. L'élément de fixation (1a, 1b, 1c) selon la revendication 1, dans lequel l'élément de fixation (1a, 1b, 1c) est apte à être inséré au moins en partie dans une douille de cheville (9a, 9b), dans lequel la douille de cheville (9a, 9b) comporte au moins une première zone d'expansion, et la première zone d'expansion est apte à être insérée dans le substrat (10).

3. L'élément de fixation (1a, 1b, 1c) selon une des revendications précédentes, dans lequel la première zone d'extrémité (2) de l'élément de fixation (1a, 1b, 1c) est conçue pour former un premier moyen d'expansion (5a, 5b) et la seconde zone d'extrémité (3) est apte à former au moins en partie un deuxième moyen d'expansion (6a) .

4. L'élément de fixation (1a, 1b, 1c) selon la revendication 3, dans lequel l'élément de contrôle de pose (4, 4a, 4b) est disposé sur l'élément de fixation (1a, 1b, 1c) en partie entre le premier moyen d'expansion (5a, 5b) et le deuxième moyen d'expansion (6a) .

5. L'élément de fixation (1a, 1b, 1c) selon une des revendications précédentes, dans lequel l'élément de contrôle de pose (4, 4a, 4b) est disposé sur l'élément de fixation (1a, 1b, 1c) à une distance déterminée de la première zone d'extrémité (2) et cette distance est corrélée avec une profondeur d'insertion de l'élément de fixation (1a, 1b, 1c) dans le substrat (10).

6. L'élément de fixation (1a, 1b, 1c) selon la revendication 1, dans lequel l'élément de contrôle de pose (4, 4a, 4b) comporte au moins un point de rupture imposée (8).

7. L'élément de fixation (1a, 1b, 1c) selon une des revendications précédentes, dans lequel la seconde zone d'extrémité (3) comporte un contre-appui.

8. L'élément de fixation (1a, 1b, 1c) selon une des revendications précédentes, dans lequel l'élément de contrôle de pose (4, 4a, 4b) est apte à étancher l'élément de fixation (1a, 1b, 1c) au moins en partie par rapport au substrat (10).

9. Un procédé de pose d'un élément de fixation (1a, 1b, 1c) dans un substrat (10), le procédé comportant les étapes de :
enfoncement initial d'une première zone d'extrémité (2) de l'élément de fixation (1a, 1b, 1c) dans le substrat (10) ;
vérification de la force d'ancrage de l'élément de fixation (1a, 1b, 1c) dans le substrat (10), la force d'ancrage de l'élément de fixation (1a, 1b, 1c) étant suffisante si un élément de contrôle de pose (4, 4a, 4b) disposé de manière fixe sur une seconde zone d'extrémité (3) de l'élément de fixation (1a, 1b, 1c) modifie sa position par rapport à la seconde zone d'extrémité (3) en se détachant ou en coulissant et si un enfoncement ultérieur de la première zone d'extrémité (2) de l'élément de fixation (1a, 1b, 1c) dans le substrat (10) a lieu, et la force d'ancrage de l'élément de fixation (1a, 1b, 1c) n'étant pas suffisante si l'élément de contrôle de pose (4, 4a, 4b) ne modifie pas sa position par rapport à la seconde zone d'extrémité (3) et empêche un enfoncement de la seconde zone d'extrémité (3) de l'élément de fixation (1a, 1b, 1c) dans le substrat (10) ; et
enfoncement au moins partiel de la seconde zone d'extrémité (3) de l'élément de fixation (1a, 1b, 1c) dans le substrat (10) si la force d'ancrage de l'élément de fixation (1a, 1b, 1c) est suffisante.
